# EUROPEAN PATENT SPECIFICATION

(11) **EP 4 241 001 B1**
(45) Date of publication and mention of the grant of the patent: **25.06.2025**
(21) Application number: 21819561.8
(22) Date of filing: 24.11.2021
(51) Int. Cl.: F16L 3/133, F16L 3/137

(54) **APPARATUS FOR SUPPORTING AN OBJECT**
VORRICHTUNG ZUM TRAGEN EINES OBJEKTS
APPAREIL DE SOUTIEN D'UN OBJET

(30) Priority: 24.11.2020 GB 202018440; 03.03.2021 GB 202102979
(43) Date of publication of application: 13.09.2023
(73) Proprietor: Rapier Star Holdings Limited, Macclesfield Cheshire SK11 9JA (GB)
(72) Inventor: FURNESS, David, Macclesfield Cheshire SK11 9JA (GB); FURNESS, Mark, Macclesfield Cheshire SK11 9JA (GB); DAVIDSON, Paul, Macclesfield Cheshire SK11 9JA (GB)
(74) Representative: Swindell & Pearson Limited
(86) International application number: PCT/GB2021/053053
(87) International publication number: WO 2022/112762

(56) References cited:
- EP-A1- 0 041 806
- WO-A1-2016/075311
- GB-A- 2 097 508
- GB-A- 2 336 622

## Description

### TECHNOLOGICAL FIELD

Embodiments of the present disclosure relate to an apparatus for supporting an object. Some relate to an apparatus for supporting a pipe from a threaded rod.

### BACKGROUND

Objects such as pipes are often hung from one end of rod, which could for instance be a threaded rod. The other end of the threaded rod may be fastened to a wall or a ceiling to enable the rod to support the pipe.

To hang a pipe from a threaded rod, a section of the pipe is received in a clamp with a threaded hole for receiving the end of the threaded rod. The clamp comprises two opposing halves which encircle the pipe, the two opposing halves being secured together using two bolts or screws on opposing sides of the clamp. These pipe hanging assemblies involve multiple components and fasteners, and thus these assemblies are time consuming and inefficient. Furthermore, the multiple fasteners used provide multiple weak points in the assembly, which increases the possibility of the assembly failing under load.

GB2097508 discloses a pipe hanger arranged to be positioned about a pipe to be suspended. The pipe hanger can be moved to a closed position and engaged upon a supporting rod so as to carry the pipe. The hanger takes the form of an elongated band the ends of which are brought into proximity to one another by bending the band into a general oval shape. The ends of the band are formed in configurations registered with the thread pattern of the support rod when engaged thereagainst and a cylindrical ferrule is moved downwardly over the ends of the band so as to move the same into forceful engagement with the threaded supporting rod. An upstanding tab on one of the ends of the band is then distorted by bending the same downwardly so as to hold the cylindrical ferrule in desired position in which the ends of the band remain in tight, non-slipping engagement with the threaded support rod.

### BRIEF SUMMARY

The scope of the invention is defined by the appended claims. According to various, but not necessarily all, embodiments there is provided an apparatus for supporting an object, the apparatus comprising: a support surface; a first retainer and a second retainer, the first retainer being for coupling at least in part by the support surface to the second retainer, or being coupled at least in part by the support surface to the second retainer, wherein at least one of the first and second retainers comprises a stop; a fastener, comprising: an outer part including an internal surface that comprises a threaded portion, wherein the internal surface of the outer part is an internal surface of a through hole extending through the outer part; and an inner part including an external thread arranged to enable the outer part to threadably rotate around the inner part, and at least one slot having a non-circular cross section in a plane perpendicular to the screw axis of the external thread, the at least one slot being shaped to receive the first and second retainers, such that the first and second retainers are rotatably fixed relative to the at least one slot and the stop prevents the retainers from exiting the at least one slot in a direction co-incident with or parallel to the screw axis.

The stop may be a distal stop. The at least one slot may be shaped to receive the first and second retainers together. The at least one slot may comprise at least two slots. A first slot may be shaped to receive the first retainer and a second slot may be shaped to receive the second retainer, such that the first retainer is rotatably fixed relative to the first slot and the stop prevents the first retainer from exiting the first slot in a direction co-incident with or parallel to the screw axis; and such that the second retainer is rotatably fixed relative to the second slot and the stop prevents the second retainer from exiting the second slot in a direction co-incident with or parallel to the screw axis.

The first slot may be parallel with the second slot. The first and second slots may both be through holes. The first and second slots may at least partially overlap in a direction parallel to the screw axis.

The at least one slot may comprise a dividing portion which divides the at least one slot such that it comprises a first portion that is shaped to receive the first retainer and a second portion that is shaped to receive the second retainer. The first portion may be parallel with the second portion. The first and second portions may both be through holes. The first and second portions may at least partially overlap in a direction parallel to the screw axis.

The stop may be formed by at least one kink in at least one of the first and second retainer. The stop may be formed by at least two kinks in at least one of the first and second retainer. The stop of the first retainer may be formed by at least one kink in the first retainer and the stop of the second retainer may be formed by at least one kink in the second retainer. The at least one kink is configured to be deformed by the at least one slot such that when the retainer comprising the at least one kink is located in the at least one slot, the at least one kink is straightened.

The first and second retainers may be substantially non-linear. The first and second retainers may each be at least one of curved, crimped, kinked, twisted, sawtooth shaped, and wave shaped. The at least one slot may be substantially non-linear. The at least one slot may be at least one of curved, crimped, kinked, twisted, sawtooth shaped, and wave shaped. Each of the at least two slots may be substantially non-linear. Each of the at least two slots may be at least one of curved, crimped, kinked, twisted, sawtooth shaped, and wave shaped.

According to various, but not necessarily all, embodiments there is provided examples as claimed in the appended claims.

### BRIEF DESCRIPTION

Some examples will now be described with reference to the accompanying drawings in which:
Fig. 1 shows a perspective view of a first example apparatus and a threaded rod, the apparatus being a disassembled condition;
Fig. 2 shows a magnified view of Fig. 1;
Fig. 3 shows a perspective view of the first example apparatus, the apparatus being in an assembled condition;
Figs. 4A to 4C show cross sectional views of an inner part of a fastener, along with first and second retainers of the first example apparatus;
Figs. 5A to 5F show cross sectional views of the first example apparatus at various stages of apparatus;
Figs. 6A and 6B show cross sectional views of two supports, along with the first example apparatus;
Fig. 6C shows a cross sectional view of the two supports of Figs. 6A and 6B, along with three inner parts of fasteners;
Fig. 6D shows a side view of a second example apparatus and the first example apparatus, the first and second example assemblies being shown in an assembled condition;
Fig. 7A to 7C show a third support, along with two inner parts of second and third fasteners;
Figs. 8A to 8C show an example of an inner part of a fastener;
Figs. 9A to 9C show an example of an inner part of a fastener;
Figs. 10A and 10B show an example of an intermediate part;
Figs. 11A and 11B show an example of an intermediate part;
Fig. 12 shows an example of a brace;
Fig. 13 shows an example of a brace;
Fig. 14A shows a perspective view of an example apparatus, the apparatus being in a disassembled condition;
Fig. 14B shows a perspective view of an example apparatus, the apparatus being in an assembled condition;
Fig. 15A shows a perspective view of an example apparatus, the apparatus being in a disassembled condition;
Fig. 15B shows a perspective view of an example apparatus, the apparatus being in an assembled condition;
Fig. 16A shows a side view and cross section of an assembled apparatus;
Fig. 16B shows a side view and cross section of an assembled apparatus;
Fig. 17A shows a perspective view of a fourth example support;
Fig. 17B shows a magnified view of Fig. 17A;
Fig. 18 shows an example of an inner part of a fastener;
Fig. 19 shows a side view and cross section of an example apparatus, the apparatus being in an assembled condition;
Fig. 20A shows a perspective view of a fifth example support;
Fig. 20B shows a magnified view of Fig. 20A;
Fig. 21 shows an example of an inner part of a fastener;
Fig. 22 shows a side view and cross section of an example apparatus, the apparatus being in an assembled condition;
Fig. 23A shows a perspective view of a sixth example support;
Fig. 23B shows a magnified view of Fig. 23A;
Fig. 24 shows an example of an inner part of a fastener;
Fig. 25 shows a perspective view of a seventh example support; and
Fig. 26 shows a cross section of an example apparatus, the apparatus being in an assembled condition.

### DETAILED DESCRIPTION

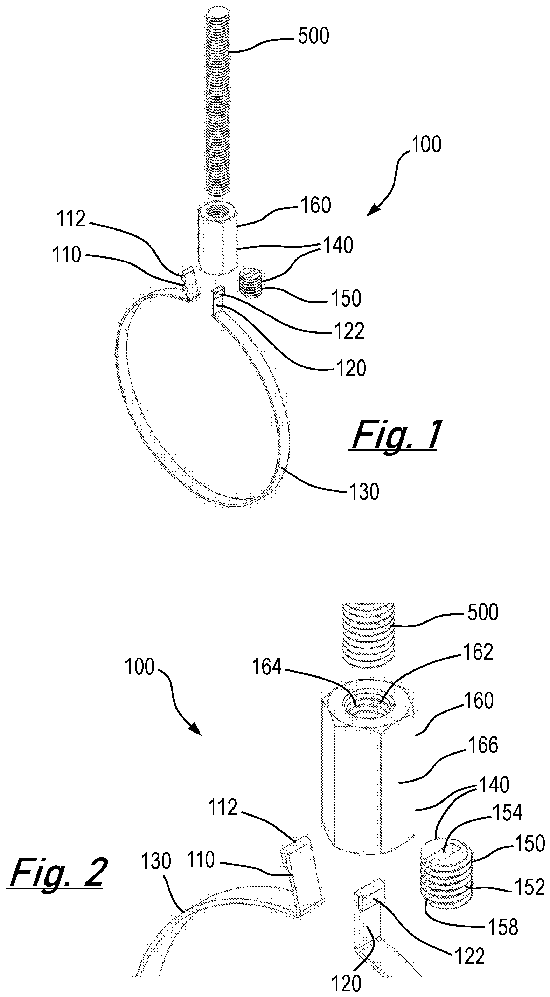

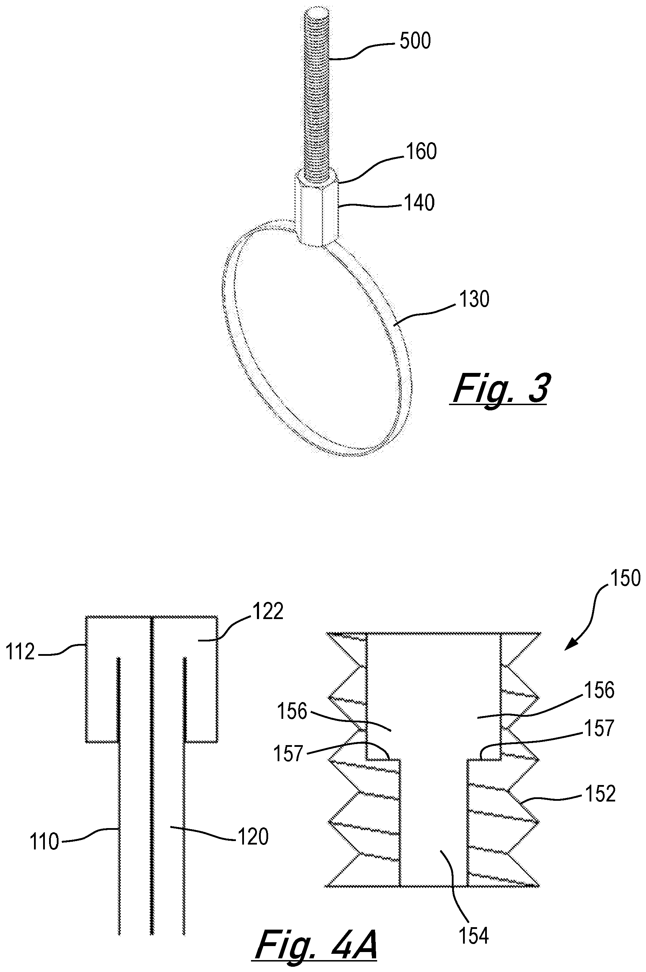

Fig. 1 shows an example first apparatus 100 for supporting an object, along with a threaded rod 500. In Fig. 1, the first apparatus 100 is shown in an unassembled condition. Fig. 2 shows a magnified view of Fig. 1. The first apparatus 100 is shown in an assembled condition in Fig. 3. The first apparatus 100 includes first and second retainers 110, 120, a first support 130 including a first support surface, and a first fastener 140. The first fastener 140 comprises an inner part 150 and an outer part 160. In this example, the first apparatus 100 is for supporting a pipe from the threaded rod 500.

The first support 130 can be considered an elongate member.

As shown best in Fig. 2, the first and second retainers 110, 120 together have a non-circular cross section. In this example, first and second retainers are both elongate, and the longitudinal cross section of each of the first and second retainers 110, 120 is non-circular. As shown best in Fig. 2, the longitudinal cross section of each of the first and second retainers 110, 120 is substantially rectangular.

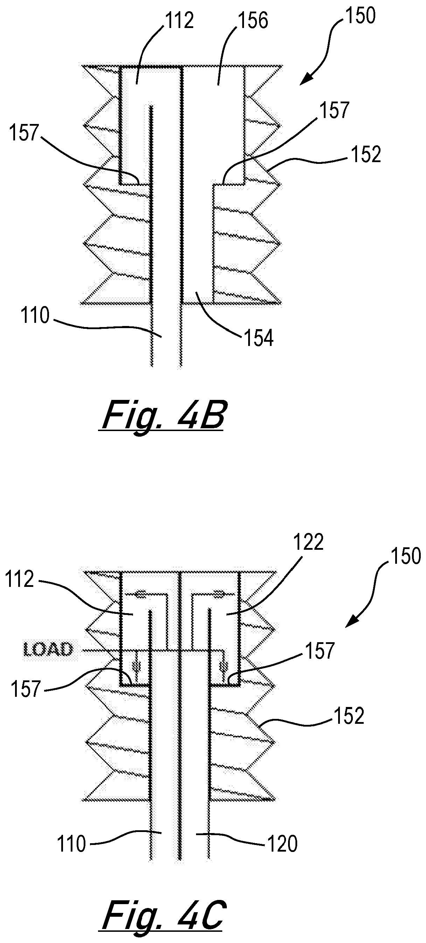

The first retainer 110 comprises a stop 112. The stop 112 may be a distal stop 112. The distal stop 112 is provided at a distal end of the first retainer 110, and the distal stop 112 is wider than the adjacent portion of the first retainer 110. In other words, the distal stop 112 extends to a greater extent than the adjacent portion of the first retainer 110 in a dimension perpendicular to the length dimension of the first retainer 110. In this example, the distal stop 112 is formed from a folded section of the retainer 110. The distal end of the retainer 110 may be folded 180° to form the distal stop 112, such that the distal stop 112 is double the thickness of the adjacent portion of the retainer 110. This is also illustrated in Figs. 4A to 4C, which show a cross sectional view of the retainers 110, 120. In this particular example, the first and second retainers 110, 120 are similar, with each comprising a stop 112, 122.

The first retainer 110 is coupled at least in part by the first support surface to the second retainer 120. The first support 130 comprises the first support surface for supporting an object. The first support 130 of Figs. 1 to 3 is annular in shape (and arranged to encircle an object such as a pipe), but may be a different shape in other examples. In this example, the first support surface is provided by an inner surface of the annular shaped first support 130.

In this example of Figs. 1 to 3, the first and second retainers 110, 120 are integrally formed with the first support 130. The first support 130 and the retainers 110, 120 may be formed from a single band for encircling the object. The band may be a metal band, such as a steel band. The band may have a substantially rectangular cross section. In this example, the band forms a ring for encircling a section of a pipe. In this example the ring is substantially circular, but in other examples the ring could be a different shape, such as rectangular or square to support a rectangular or square cross section pipe. As shown for instance in Figs. 1 & 2, the first and second retainers 110, 120 may extend outwardly from the first support 130, and be formed from sections of the band which are bent outwardly from the ring.

As shown in Fig. 2, the inner part 150 of the first fastener 140, which may be in the form of a section of threaded bar, includes an external thread 152. The external thread 152 is defined by a helix extending around the inner part 152, and the axis extending through the centre of the helix defines a screw axis. In this example, the inner part 150 is a substantially cylindrical shape.

The inner part 150 further includes a slot 154 with a non-circular cross section in a plane perpendicular to the screw axis of the external thread 152. The slot 154 is defined by walls. The slot 154 is shaped to receive the first and second retainers 110, 120 together, such that the first and second retainers 110, 120 are rotatably fixed relative to the slot 154, when located therein. This is illustrated in Figs. 4A to 4C. In this example, the slot 154 is shaped to correspond to the combined longitudinal cross sections of the first and second retainers 110, 120, and vice versa. This means that when the first and second retainers 110, 120 are rotated inside the slot 154, the inner part 150 also rotates. In other words, the inner part 150 does not rotate relative to the first and second retainers 110, 120 when both the first and second retainers 110, 120 are inserted into the slot 154. In some examples, the inner part 150 may include more than one slot.

In the example of Figs. 1 to 3, the slot 154 is in the form of a through hole extending along the screw axis through the inner part 150. The slot 154 has a substantially rectangular cross section in a plane perpendicular to the screw axis to locate the first and second retainers 110, 120, which have a corresponding combined rectangular longitudinal cross section. In other examples, the cross section of the slot 154 in a plane perpendicular to the screw axis of the slot 154 may be for instance a hexagon, a triangle, a square (i.e. a rectangle with all sides of equal length), an oval or any other non-circular shape to enable torque to be transferred to or from retainers with a corresponding longitudinal cross section. The non-circular shape may have at least one vertex.

The corresponding cross section of the slot 154 and the first and second retainers 110, 120 combined means that torque can be transferred between the first and second retainers 110, 120 and the slot 154, with the first and second retainers 110, 120 acting as a "internal spanner", which can cause or prevent rotation of the inner part 150.

The distal stops 112, 122 of the first and second retainers 110, 120 prevent the retainers 110, 120 from exiting the slot 154 in a direction co-incident with or parallel to the screw axis of the inner part 150. The distal stops 112, 122 of the first and second retainers 110, 120 combined are wider than the slot 154, such that the stops 112, 122 are unable to pass through the slot 154 when the retainers 110, 120 are located in the slot 154. In other words, the distal stops 112, 122 of the first and second retainers 110, 120 combined extend to a greater extent than the slot 154 in a dimension perpendicular to the screw axis to prevent the retainers 110, 120 from exiting the slot 154 in a direction co-incident with or parallel to the screw axis.

The slot 154 of the inner part 150 includes an elongate opening 158 extending parallel to the screw axis, which is configured to receive the first and second retainers 110, 120 from a direction perpendicular to the screw axis of the external thread 152. The elongate opening 158 is present in the surface comprising the external thread 152. In this example, the elongate opening 158 of the inner part 150 is shaped to receive only one of the first and second retainers 110, 120 at a time. Therefore, when the first and second retainers 110, 120 are both in the slot 154, the retainers 110, 120 are more secure in the slot 154, as the opening 158 is narrower than the combined width of the first and second retainers 110, 120. However, in other examples, the elongate opening 158 of the inner part 150 may be wider, and shaped to receive both the first and second retainers 110, 120 simultaneously.

Figs. 4A to 4C show schematic cross-sectional views of the inner part 150 of the first fastener 140, along with the first and second retainers 110, 120, in various stages of assembly. As shown in the example Figs. 4A to 4C, a recess 156 is provided in the side of the slot 154 of the inner part 150, the recess being shaped to locate the distal stop 112 of the first retainer 110. The recess 156 provides an abutment surface 257 to prevent the retainer 110 from exiting the slot 154 in a direction co-incident with or parallel to the screw axis. Furthermore, locating the distal stop 112 of the first retainer 110 in the recess prevents the stop 112 unfurling under excessive pressure. In this example a recess 156 is provided in both sides of the slot 154 to locate the distal stops 112, 122 of the first and second retainers 110, 120 respectively. In other examples, the slot 154 may not include a recess 156, and the end surfaces (i.e. the outermost surfaces in a plane perpendicular to the screw axis) of the inner part 150 may act as the abutment surface.

As illustrated in Fig. 2, the outer part 160, which in this example is in the form of an internally threaded nut, includes an internal surface 162 with a threaded portion 164 for engaging with the external thread 152 of the inner part 150. The internal surface 162 of the outer part 160 is also configured to threadably engage with the threaded rod 500. The internal surface 162 of the outer part 160 is an internal surface of a through hole extending through the outer part 160, and the threaded portion 164 of the internal surface 162 extends for substantially the majority of the length of the outer part 160. The hole extending through the outer part 160 has a greater extent along the screw axis than the inner part 150, such that the whole of the inner part 150 can be received within the hole of the outer part 160. In this example, the internal surface 162 of the outer part 160 is substantially cylindrical.

The outer part 160 is configured to threadably rotate around the inner part 150 and the threaded rod 500. Rotation of the outer part 160 on the inner part 150 and threaded rod 500 simultaneously causes the inner part 150 to be urged towards or away from the end of the longitudinal end of the threaded rod 500.

The outer part 160 includes one or more planar surfaces 166 on its external surface to enable a spanner to be received thereon and rotate the outer part 160. In the example shown in Figs. 1 to 3 six planar surfaces 126 are provided, and the external surface of the outer part 160 has a substantially hexagonal cross section.

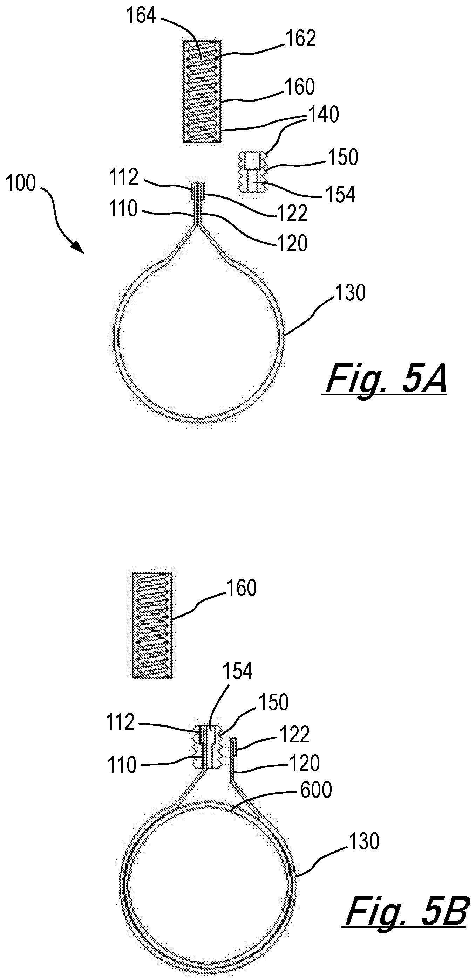

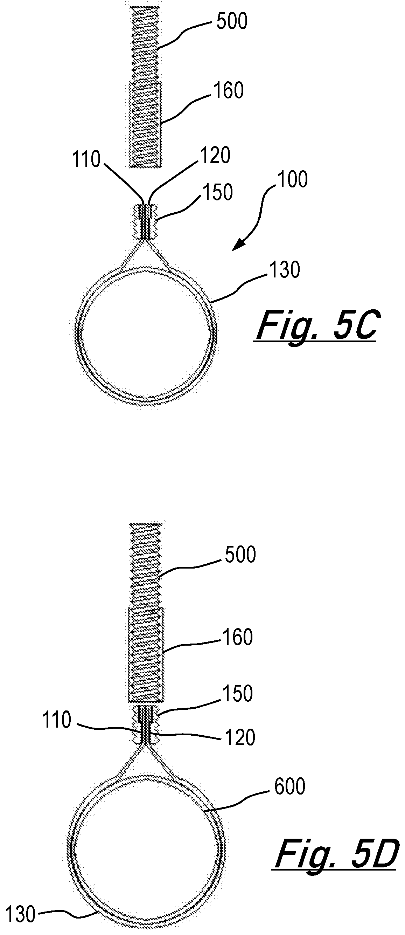

Figs. 5A to 5F show cross sectional views of the first apparatus 100 in various stages of assembly, the first apparatus 100 being for supporting a pipe 600. In this example the pipe 600 has a substantially circular cross section, and the ring of the band is substantially circular in shape.

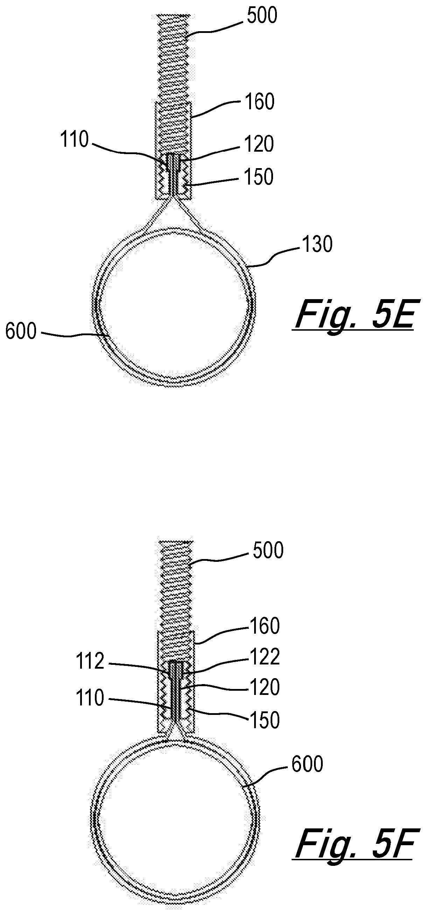

As illustrated in Figs. 5A to 5C, in use, the first and second retainers 110, 120 are located in the slot 154 of the inner part 150 of the first fastener 140. The outer part 160 of the first fastener 140 is also threadably located on a threaded rod 500. The inner part 150 is then located at the longitudinal end of the threaded rod 500, and the outer part 160 is threadably rotated onto the inner part 150, such that the outer part 160 is threadably engaged with both the inner part 150 and the threaded rod 500. As illustrated in Figs. 5E and 5F, further rotation of the outer part 160 causes the inner part 150 to be urged towards the end of the threaded rod 500, to cause tightening of the first support 130 and the first support surface around the pipe. Once assembled, the first support 130 is hung from the threaded rod 500.

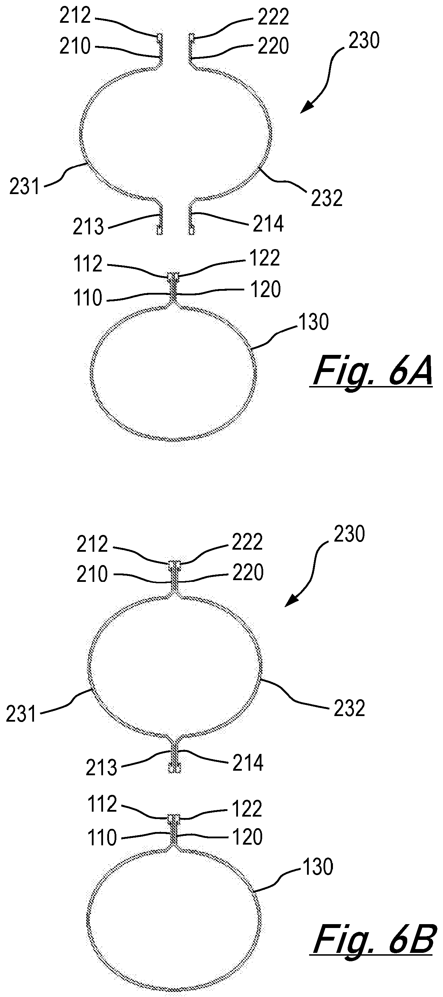

Fig 6A shows the first support 130 of Figs. 1 to 3 and a second support 230 including a second support surface. A first retainer 210 extending from the second support 230 is for coupling at least in part by the second support surface to a second retainer 220 extending from the second support 230. The second support 230 is similar to the first support 130, but the second support 230 comprises separate first and second parts 231, 232. The first retainer 210 with a distal stop 212 extends from the first part 231 of the second support 230, and the second retainer 220 (also with a distal stop 222) extends from the second part 232. In this example the first and second parts 231, 232 are each substantially semi-circular in shape, and the second support surface is provided by the inner surface of each of the respective semi-circular parts.

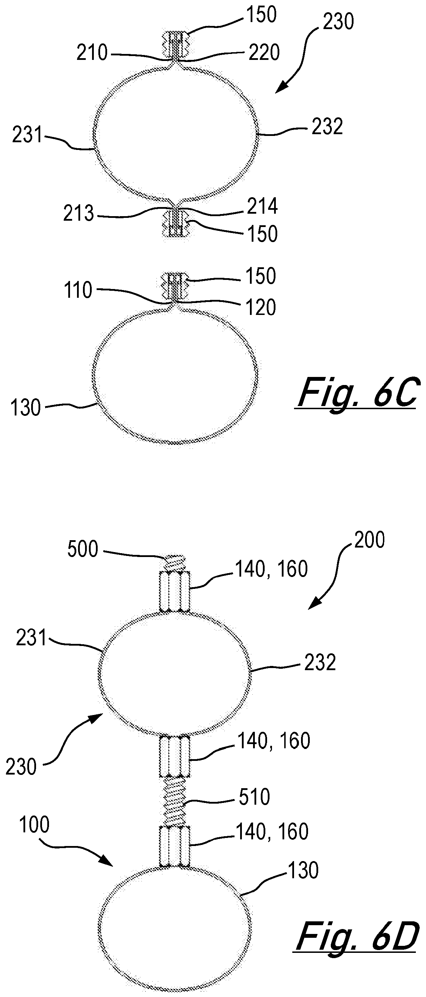

A third retainer 213 with a distal stop (distal stop not labelled in Figs. 6A to 6D) extends from the first part 231 of the second support 230. In this example the third retainer 213 is provided at an opposite end of the first part 231 to the first retainer 210. A fourth retainer 214 with a distal stop extends from the second part 232 of the second support 230. In this example the fourth retainer 214 is provided at an opposite end of the second part 231 to the second retainer 220. Fig 6B shows pairs of retainers 110, 120, 210, 213, 214, 220 adjacent to one another, and Fig 6C shows the same, but with inner parts 150 of three of the first fasteners 140 mounted to each of the three pairs of retainers 110, 120, 210, 213, 214, 220.

Figs. 6D shows the first apparatus 100, along with a second example apparatus 200 comprising the second support 230 and three of the first fasteners 140, with the first and second apparatuses 100, 200 being in an assembled condition. The three first fasteners 140 of the second apparatus 200 secure the second support 230 to the threaded rod 500 of Figs. 1-3 and Fig. 5, secure the second support 230 to a further threaded rod 510, and secure the first support 130 to the further threaded rod 510 to couple the first apparatus 100 to the further elongate rod 510. As illustrated in Fig. 6D, the separate first and second parts 231, 232 and the third and fourth retainers 213, 214 enable objects such as pipes to be mounted above one another in a space.

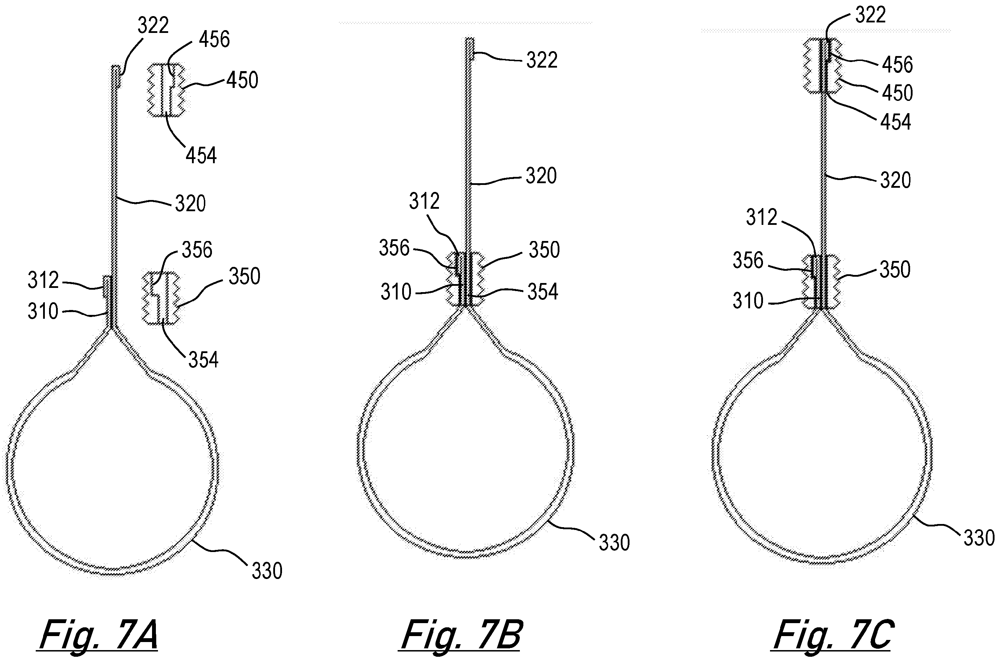

Figs. 7A to 7C illustrate alternate first and second retainers 310, 320 of a third apparatus for supporting an object. The third apparatus also includes a third support 330 and a second fastener. The third support 330 includes a third support surface which is similar to the first support surface of the first support 130.

The alternate first and second retainers 310, 320 are similar to the first and second retainers 110, 120, 210, 220. However, in this example the alternate second retainer 320 is longer than the alternate first retainer 310, i.e. the elongate alternate second retainer 320 has a greater length dimension than the elongate alternate first retainer 310. The alternate second retainer 320 may be at least twice the length of the alternate first retainer 310. As illustrated in Fig. 7A, the alternate second retainer 320 can extend away from the alternate first retainer 310 to attach to, for instance, a beam, a wall or a ceiling, to hang the third support 330, without requiring a threaded rod.

Figs. 7A to 7C show an inner part 350 of the second fastener. The inner part 350 of the second fastener is similar to the inner part 150 of the first fastener 140, however only a single recess 356 is provided in the slot 354. The recess 356 of the inner part 350 of the second fastener is shaped to locate the distal stop 312 of the alternate first retainer 310, as illustrated in Fig. 7B.

The outer part of the second fastener is not shown in Figs. 7A to 7C (and thus the third apparatus, which includes the outer part of the second fastener is not fully shown in Figs. 7A to 7C), but the outer part of the second fastener could for instance be substantially the same as the outer part 160 of the first fastener 140. The outer part 160 of the second fastener may be an object with an internal surface that comprises a threaded portion corresponding to the external threading 352 of the inner part 350 of the second fastener.

The distal stop 312 of the alternate first retainer 310 prevents the alternate first and second retainers 310, 320 from exiting the slot 354 of the inner part 350 of the second fastener in a direction co-incident with or parallel to the screw axis of the inner part 350. The alternate second retainer 320 and the distal stop 312 of the alternate first retainer 310 combined are wider than the slot 354, such that the stop 312 is unable to pass through the slot 354 when the retainers 310, 320 are located in the slot 354. In other words, the alternate second retainer 320 and the distal stop 312 of the alternate first retainer 310 combined extend to a greater extent than the slot 354 in a dimension perpendicular to the screw axis to prevent the retainers 310, 320 from exiting the slot 354 in a direction co-incident with or parallel to the screw axis.

The alternate second retainer 320 includes attachment means for use in attaching the alternate second retainer 320 to a fixing. In this example, the attachment means is a distal stop 322. In other examples, the attachment means of the alternate second retainer 320 could for instance be a distal hook.

Furthermore, in this particular example, the third apparatus includes a third fastener, and the inner part 450 of the third fastener is shown in Figs. 7A and 7C. The third fastener is for securing the alternate second retainer 320 to a body, such as a beam, a wall or a ceiling. The inner part 450 of the third fastener is similar to the inner part 350 of the second fastener. However, the slot 454 of the inner part 450 of the third fastener is shaped to receive the alternate second retainer 320, rather than the first and second retainers 110, 120 together, such that the alternate second retainer 320 is rotatably fixed relative to the slot 454 when located therein. The slot 454 of the inner part 450 of the third fastener is narrower than the alternate first and second retainers 310, 320 combined, and is therefore too small to receive both the alternate first and second retainers 310, 320 together. A single recess 456 is provided in the slot 454. The recess 456 of the inner part 450 of the third fastener is shaped to locate the distal stop 322 of the alternate second retainer 320.

The outer part of the third fastener is not shown in Figs. 7A to 7C, but the outer part of the third fastener could for instance be substantially the same as the outer part 160 of the first fastener 140. In other examples, the outer part of the third fastener could be a threaded hole in a wall, a ceiling, or a clamp. The outer part of the third fastener may be an object with an internal surface that comprises a threaded portion corresponding to the external threading 352 of the inner part 350 of the third fastener.

The distal stop 322 of the alternate second retainer 320 prevents the alternate second retainer 320 from exiting the slot 454 of the inner part 450 of the third fastener in a direction co-incident with or parallel to the screw axis of the inner part 450. The distal stop 322 of the alternate second retainer 320 is wider than the slot 454 of the inner part 450 of the third fastener, such that the stop 322 is unable to pass through the slot 454 when the alternate second retainer 320 is located in the slot 454. In other words, the distal stop 322 of the alternate second retainer 320 extends to a greater extent than the slot 454 of the inner part 450 of the third fastener in a dimension perpendicular to the screw axis to prevent the alternate second retainer 320 from exiting the slot 454 in a direction co-incident with or parallel to the screw axis.

In use, the third support 330 of the third apparatus is first located on an object, such as a pipe. The alternate first and second retainers 310, 320 are then inserted into the slot 354 of the inner part 350 of the second fastener, as shown in Fig. 7B. The outer part (not shown) of the second fastener can then be threadably located onto the inner part 350 of the second fastener to secure the object in the third support 330.

Subsequently, as illustrated in Fig. 7C, the alternate second retainer 320 can be inserted into the slot 454 of the inner part 450 of the third fastener. Finally, the inner part 450 of the third fastener may be threadably located into the outer part of the third fastener. As indicated, the outer part of the third fastener could be a threaded hole in a wall, a ceiling, or a clamp. Thus, in this example, the object can be hung from a wall, a ceiling, or a clamp without the use of a threaded rod.

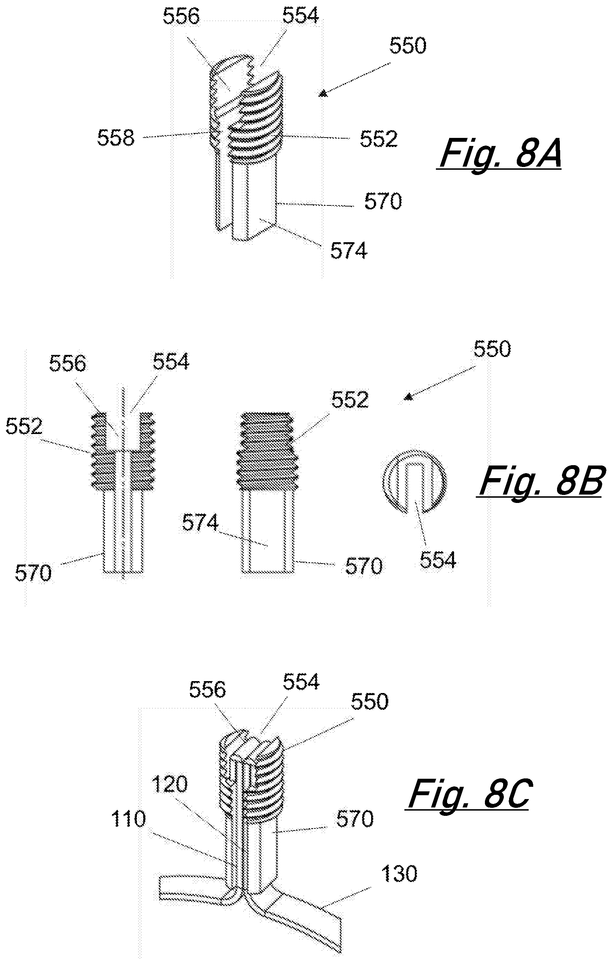

Figs. 8A to 8C show an example of an inner part 550 for a fastener.

In examples, the inner part 550 can be used in any suitable fastener. For example, the inner part 550 can be used in any of the examples described herein. The inner part 550 can therefore form part of a first fastener 140, second fastener and/or third fastener.

The inner part 550 shown in the example of Figs. 8A to 8C is similar to the inner part 150 shown in Figs. 1 and 2, and comprises an external thread 552, a slot 554, a recess 556 and an elongate opening 558.

However, in examples, one or more of the features of the inner part 550 of Figs. 8A to 8C can be changed and/or omitted. For example, the recess 556 and/or elongate opening 558 can be omitted.

The inner part 550 of Figs. 8A to 8C comprises a non-threaded portion 570 which extends from an end of the externally threaded portion along a direction substantially parallel with the screw axis of the external thread 552.

In the example of Fig. 8A the non-threaded portion 570 extends from the end of the externally threaded portion that is opposite the end in which the recess 556 is located.

The non-threaded portion 570 can be considered an extended portion and/or a retaining portion.

The non-threaded portion 570 comprises the slot 554 and elongate opening 558. Accordingly, in the example of Figs. 8A to 8C the slot 554 and elongate opening 558 run along the length of the inner part 554.

The non-threaded portion 570 has a non-circular cross section in a plane perpendicular to the screw axis of the external thread 552.

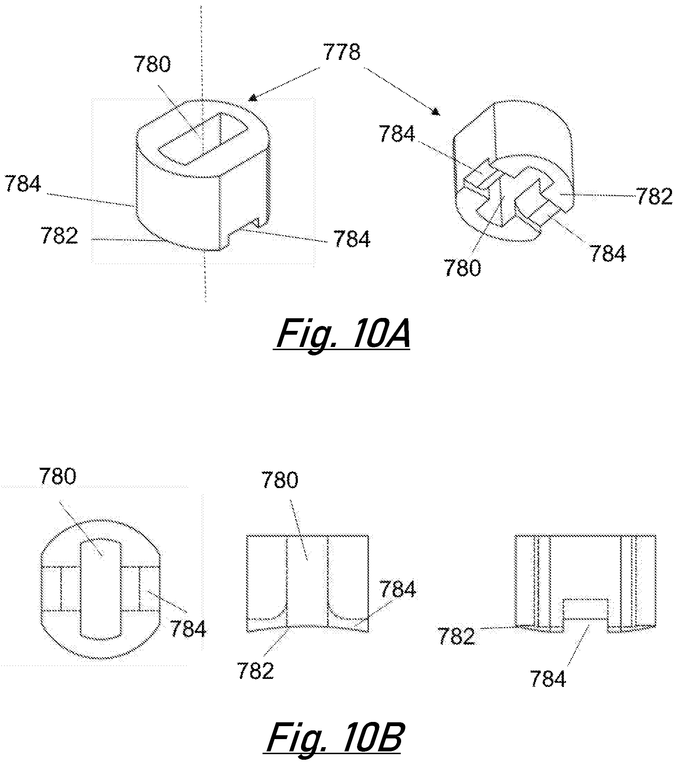

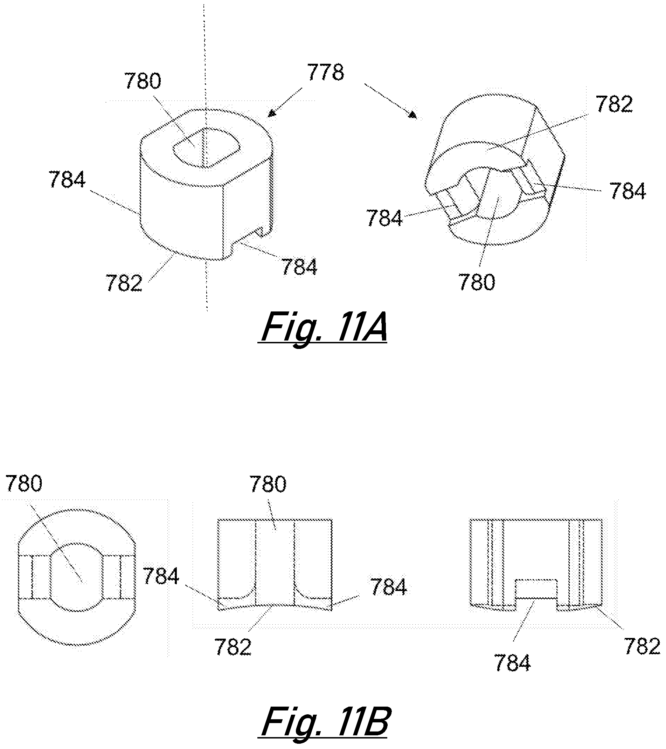

The non-threaded portion 570 comprises an outer surface 574. The outer surface 574 can have any suitable form. In examples, the outer surface 574 can be configured to fit into and/or cooperate with an intermediate or anti-twist part. See, for example, Figs. 10A and 10B and Figs. 11A and 11B.

In the example of Figs. 8A to 8C the outer surface of the non-threaded portion 570 comprises two substantially flat, rectangular portions either side of the elongate opening 558 which are adjacent to larger, substantially flat rectangular portions extending substantially parallel to the slot 554. There is also a curved portion extending between the two larger, substantially flat rectangular portions.

The curvature of the curved portion substantially matches and/or follows the curvature of the external thread 552.

A front view of the inner part 550 is shown in the left image of Fig. 8B, a side view of the inner part 550 is shown in the central image of Fig. 8B and a top view is shown in the right image of Fig. 8B.

Fig. 8C shows first and second retainers 110, 120 located in the slot 554 of the inner part 550, with the distal stops 112, 122 (not labelled in the example of Fig. 8C) located in the recess 556 of the inner part 550.

It can be seen in Fig. 8C that the non-threaded portion 570 extends along the first and second retainers 110, 120 to an area where the first and second retainers 110, 120 meet the first support 130, or elongate member.

In the example of Fig. 8C the two larger, substantially flat rectangular portions of the non-threaded portion 570 are substantially parallel with the first and second retainers 110, 120 when the first and second retainers 110, 120 are located in the slot 554.

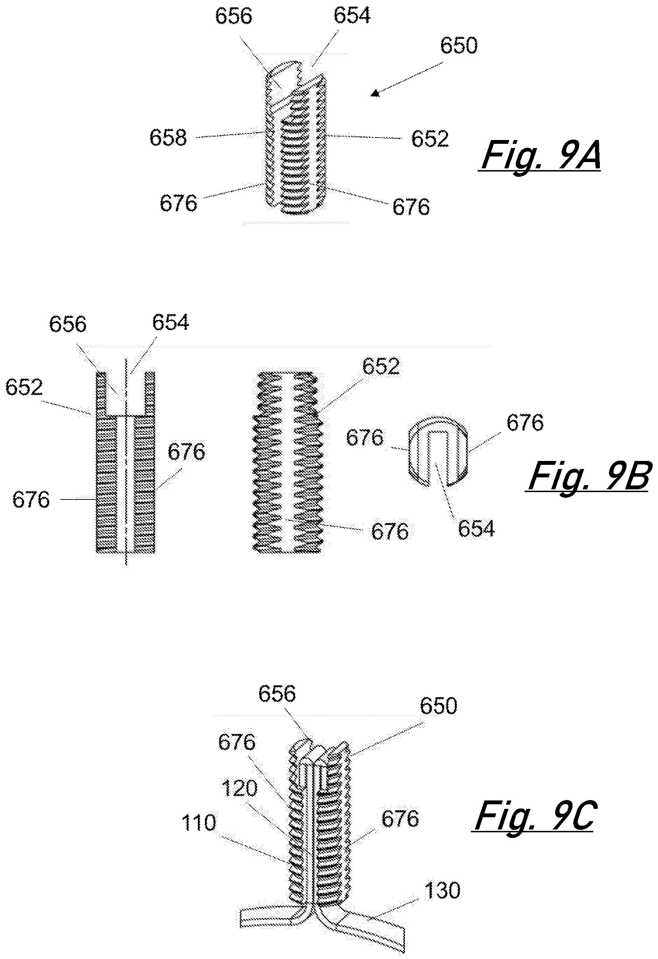

Figs. 9A to 9C show an example of an inner part 650 for a fastener.

In examples, the inner part 650 can be used in any suitable fastener. For example, the inner part 650 can be used in any of the examples described herein. The inner part 650 can therefore form part of a first fastener 140, second fastener and/or third fastener.

The inner part 650 shown in the example of Figs. 9A to 9C is similar to the inner part 150 shown in Figs. 1 and 2, and comprises an external thread 652, a slot 654, a recess 656 and an elongate opening 658.

However, in examples, one or more of the features of the inner part 650 of Figs. 9A to 9C can be changed and/or omitted. For example, the recess 656 and/or elongate opening 658 can be omitted.

The external thread 652 of the inner part 650 of Figs. 9A to 9C has a non-circular cross section in a plane perpendicular to the screw axis of the external thread 652.

In examples, the external thread 652, and therefore the exterior surface of the inner part 650, can be considered to be configured and/or shaped to cooperate with and/or allow the inner part 650 to fit within a through hole of an intermediate part. See, for example, Figs. 10A and 10B and Figs. 11A and 11B.

The external thread 652, or the outer surface, of the inner part 650 may comprise a number of flattened portions 676. In the example of Figs. 9A to 9C the external thread 652, or the external surface, of the inner part 650 has two flattened portions 676 opposite one another.

In the example of Figs. 9A to 9C the elongate opening 658 can be considered the front of the inner part 650 and the flattened portions 676 are located on the sides of the inner part 650, relative to the elongate opening 658.

The flattened portions 676 are substantially parallel with the slot 654 of the inner part 650.

A front view of the inner part 650 is shown in the left image of Fig. 9B, a side view of the inner part 650 is shown in the central image of Fig. 9B and a top view is shown in the right image of Fig. 9B.

Fig. 9C shows first and second retainers 110, 120 located in the slot 654 of the inner part 650, with the distal stops 112, 122 (not labelled in the example of Fig. 9C) located in the recess 656 of the inner part 650.

It can be seen in Fig. 9C that the inner part 650 extends along the first and second retainers 110, 120 to an area where the first and second retainers 110, 120 meet the first support 130, or elongate member.

In examples, the inner part 650 of Figs. 9A to 9C can be considered an extended inner part 650.

In the example of Fig. 9C the flattened portions 676 of the external thread 652 are substantially parallel with the first and second retainers 110, 120 when the first and second retainers 110, 120 are located in the slot 554.

Figs. 10A and 10B show an example of an intermediate part 778.

The left image of Fig. 10A shows an upper perspective view of the intermediate part 778 and the right image of Fig. 10A shows a lower perspective view of the intermediate part 778.

The left image of Fig. 10B shows a top view of the intermediate part 778, the central image of Fig. 10B shows a front view of the intermediate part 778 and the right image of Fig. 10B shows a side view of the intermediate part 778.

The intermediate part 778 can be used and/or can form part of any suitable apparatus. For example, the intermediate part 778 can form part of an apparatus as described herein.

The intermediate part 778 can be considered a spacer and/or an anti-twist part and/or collar.

The intermediate part 778 can have any suitable size and/or shape and/or form to cooperate with one or more other elements of an apparatus as described herein to stabilise and/or prevent twisting in the apparatus in use. For example, the intermediate part 778 can be configured to cooperate with an inner part 550, 650 of Figs. 8A to 8C and/or 9A to 9C and/or with the first support 130 to stabilise and/or prevent twisting of the first and second retainers 110, 120 and/or first support 130 in use.

In the example of Figs. 10A and 10B, the intermediate part 778 has the form of a tube or collar and comprises a through hole 780. The through hole 780 has a non-circular cross section in a plane perpendicular to a central or longitudinal axis of the intermediate part 778. The central or longitudinal axis extends through the centre of the intermediate part 778 and is illustrated in the left image of Fig. 10A by the dashed line.

The through hole 780 of the intermediate part 778 can have any suitable shape. In examples, the through hole is configured to allow the first and second retainers 110, 120 to be located through the intermediate part 778.

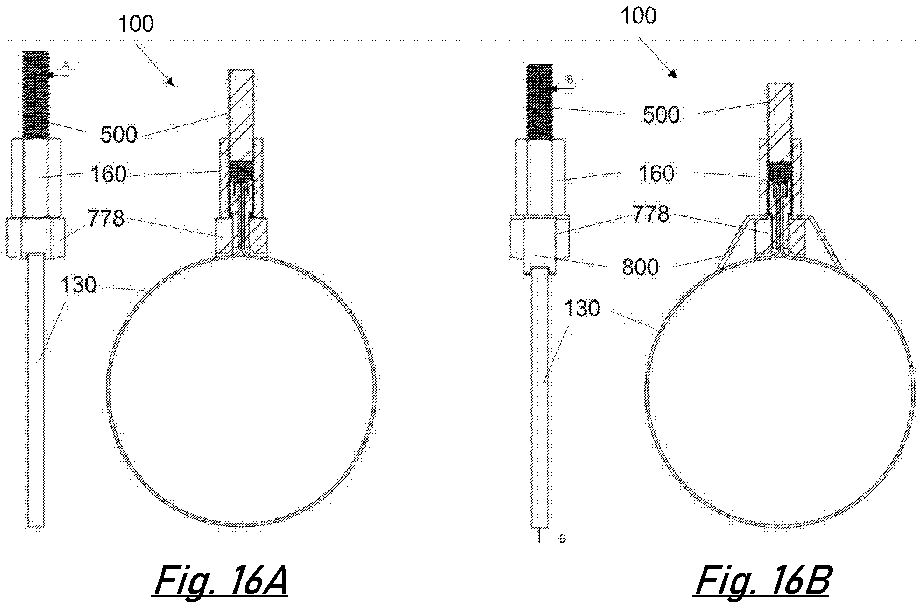

In the examples the through hole 780 of the intermediate part 778 is configured to allow the first and second retainers 110, 120 and a lower portion of an inner part 550, 560, such as the non-threaded portion 570 of the inner part 550, to be located through the intermediate part 778. See, for example, Figs. 16A and 16B.

In Figs. 10A and 10B the through hole 780 is shaped to receive the first and second retainers 110, 120 and the non-threaded portion 570 of inner part 550 of Figs. 8A to 8C such that the first and second retainers 110, 120 and the inner part 550 are rotatably fixed relative to the through hole 780.

That is, outer surface 574 of the non-threaded portion 570 and the through hole 780 can be shaped to rotatably fix the inner part 550, and the first and second retainers 110, 120 located in the slot 554 of the inner part 550, relative to the through hole 780.

In the example of Figs. 10A and 10B the through hole 780 comprises flattened portions configured to interact and/or abut the outer surface 574 of the non-threaded portion 570 of the inner part 550 to rotatably fix the inner part 550, and the first and second retainers 110, 120 located in the slot 554 of the inner part 550, relative to the through hole 780 when the intermediate part 778 is located over and/or around the inner part 550.

In the example of Figs. 10A and 10B the through hole 780 is configured to allow the first and second retainers 110, 120 and the non-threaded portion 570 of the inner part 550 to be located through the intermediate part 778 such that the intermediate portion abuts the first support 130 or elongate member. See, for example, Figs, 14A and 14B.

The intermediate part 778 of Figs. 10A and 10B comprises an end 782 having a shape configured to prevent twisting of the first support 130 when, in use, the intermediate part abuts the first support 130. The end 782 configured to abut the first support 130 can be considered a lower or bottom end 782. The opposite end of the intermediate part 778 can be considered an upper or top end.

In Figs. 10A and 10B the end 782 of the intermediate part 778 comprises two notches 784 configured to receive the band of the first support 130 when the intermediate part 778 is located in an apparatus. This can best be seen in the lower perspective and side views of Figs. 10A and 10B.

The notches 784 can be considered recesses, and/or indentations, and/or cut-outs.

The notches 784 can have any suitable shape, size and/or form. In the illustrated example the notches 784 are configured to securely receive the band of the first support 130.

The notches 784 are located on opposite sides of the intermediate part 778 and can be considered to form a channel configured to receive the band of the first support 130.

In the example of Figs. 10A and 10B a curved surface joins each notch 784 to an inner surface of the through hole 780. This can best be seen in the lower perspective view of Fig. 10A. Accordingly, in some examples, the notches 784 and curved surfaces can be considered to form a curved band channel.

The end 782 of the intermediate part 778 can have a concave curved profile configured to match the curvature of the band of the first support 130 and/or the support object such as a pipe. This can best be seen in the front view of the intermediate part 778 in Fig. 10B.

Figs. 11A and 11B show an example of an intermediate part 778.

The left image of Fig. 11A shows an upper perspective view of the intermediate part 778 and the right image of Fig. 11A shows a lower perspective view of the intermediate part 778.

The left image of Fig. 11B shows a top view of the intermediate part 778, the central image of Fig. 11B shows a front view of the intermediate part 778 and the right image of Fig. 11B shows a side view of the intermediate part 778.

The intermediate part 778 of Figs 11A and 11B is similar to the intermediate part 778 of Figs. 10A and 10B and can be as described in relation to Figs. 10A and 10B.

However, the through hole 780 of the intermediate part 778 of Figs. 11A and 11B is different compared to the through hole 780 of the intermediate part 778 of Figs. 10A and 10B.

Although the through hole 780 of the intermediate part 778 of Figs. 11A and 11B is configured to perform a similar/same function as the through hole 780 of the intermediate part 778 of Figs. 10A and 10B, the shape of the through hole 780 of the intermediate part 778 of Figs. 11A and 11B is different.

The intermediate part 778 of Figs. 11A and 11B can be considered to be configured for use with the inner part 650 of Figs. 9A to 9C and the intermediate part 778 of Figs. 10A and 10B can be considered to be configured for use with the inner part 550 of Figs. 8A to 8C.

The through hole 780 in the example of Figs. 11A and 11B is shorter in the direction running front to back of the intermediate part 778 compared to the through hole 778 of the intermediate part 778 of Figs. 10A to 10B.

This is because, with regard to the inner part 650 of Figs. 9A to 9C, the first and second retainers 110, 120 can be located in the slot 654 and the intermediate part 778 located over the inner part 650 without any movement of the inner part 650 along the front to back length of the slot 654.

However, to allow the intermediate part 778 to be located over the inner part 550 of Figs. 8A to 8C, movement of the inner part 550 along the front to back length of the slot is used to allow the non-threaded portion 570 to be located in the through hole 780 and the first and second retainers 110, 120 to be located in the slot 554 of the inner part 550.

The through hole 780 of the intermediate part 778 of Figs. 11A and 11B is configured to cooperate with the flattened portions 676 of the inner part 650 of Figs. 9A to 9C to rotatably fix the inner part 650, and the first and second retainers 110, 120 located in the slot 654 of the inner part 650, relative to the through hole 780 when the intermediate part 778 is located over and/or around the inner part 650.

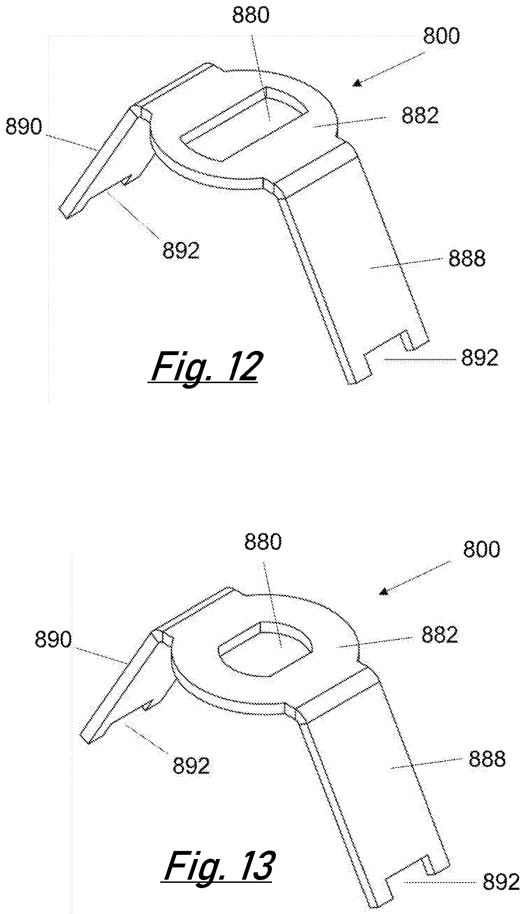

Fig. 12 shows an example of a brace 800. In the example of Fig. 12 an upper perspective view of the brace 800 is shown.

The brace 800 can be used and/or can form part of any suitable apparatus. For example, the brace 800 can form part of an apparatus as described herein.

The brace 800 can be considered a support, and/or compression plate, and/or anti-twist part.

The brace 800 can have any suitable size and/or shape and/or form to cooperate with one or more other elements of an apparatus as described herein to stabilise and/or support and/or prevent twisting in the apparatus in use. For example, the brace 800 can be configured to cooperate with the first support 130 to stabilise and/or prevent twisting of the first support 130 in use.

In the example of Fig. 12, the brace comprises a central portion 882 a first arm 888 and a second arm 890. The first and second arms 888, 890 extend away from the central portion in substantially opposite directions.

The central portion 882 is substantially flat and the first and second arms 888, 890 extend at an angle relative to the plane of the central portion. In the example of Fig. 12 the first and second arms 888, 890 are positioned at substantially the same angle relative to the central portion 882 and can be considered to extend at a downward angle.

In profile, the brace can be considered to substantially form an inverted 'flat bottomed V' shape.

The central portion 882 can have any suitable shape and/or size. In examples, the central portion is configured to abut, in use, the upper end of an intermediate part 778. See, for example, 14A, 14B, 15A and 15B.

The central portion 882 can have a shape and size to substantially match the upper end of the intermediate part 778. The brace 800 in the example of Fig. 12 can be used in conjunction with the intermediate part 778 of Figs 11A and 11B and the central portion 882 of the brace substantially matches the upper end of the intermediate part 778 of Figs. 10A and 10B.

The central portion comprises a through hole 880. The through hole 880 of the brace 800 can have any suitable shape. In examples, the through hole is configured to allow the first and second retainers 110, 120 to be located through the brace 800.

In the examples the through hole 880 of the brace 800 is configured to allow the first and second retainers 110, 120 and a lower portion of an inner part 550, 560, such as the non-threaded portion 570 of the inner part 550, to be located through the brace 800. See, for example, Figs. 16A and 16B.

In Fig. 12 the through hole 880 is shaped to receive the first and second retainers 110, 120 and the non-threaded portion 570 of inner part 550 of Figs. 8A to 8C such that the first and second retainers 110, 120 and the inner part 550 are rotatably fixed relative to the through hole 880.

That is, outer surface 574 of the non-threaded portion 570 and the through hole 880 can be shaped to rotatably fix the inner part 550, and the first and second retainers 110, 120 located in the slot 554 of the inner part 550, relative to the through hole 880.

In examples, the through hole 880 can be configured to substantially match a corresponding through hole 780 of an intermediate part 778. In the example of Fig. 12, the through hole 880 is configured to substantially match the through hole 780 of the intermediate part 778 of Figs. 10A and 10B. Accordingly, the brace 800 of Fig. 12 can be considered to be configured for use with the intermediate part 778 of Figs. 10A and 10B and therefore the inner part 550.

The central portion 882 can be considered a connection portion, and/or a slotted portion.

The arms 888 and 890 can have any suitable size and/or form. In Fig. 12 the arms 888, 890 substantially match and are generally rectangular in shape.

The arms 888 and 890 can be considered extended portions, and/or support parts, and/or legs.

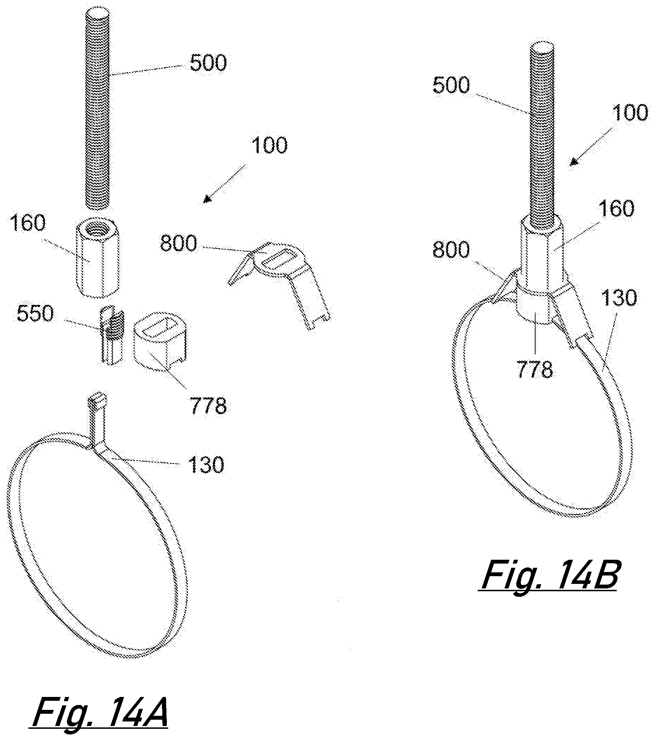

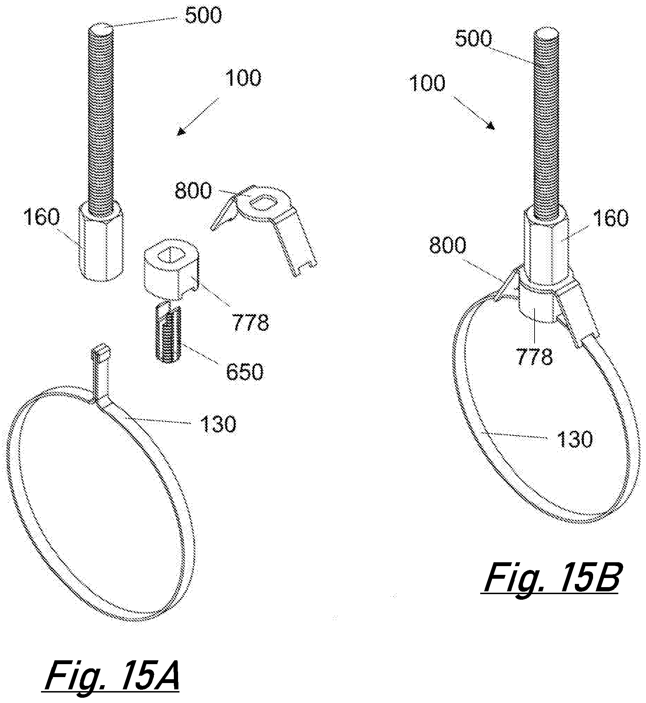

The distal ends of the arms 888, 890 comprise a notch 892 configured to receive the band of the first support 130 when the brace 800 is located in an apparatus. See, for example, Figs. 14B and 15B.

The notches 892 can be considered recesses, and/or indentations, and/or cut-outs.

The notches 892 can have any suitable shape, size and/or form. In the illustrated example the notches 892 are configured to securely receive the band of the first support 130.

The notches 892 are located at the centre of the distal end of the arms 888, 892 and can be considered to form a channel configured to receive the band of the first support 130.

Fig. 13 shows an example of a brace 800. In the example of Fig. 13 an upper perspective view of the brace 800 is shown.

The brace 800 of Fig. 13 is similar to the brace 800 of Fig. 12 and can be as described in relation to Fig. 12.

However, the through hole 880 of the brace 880 of Fig. 13 is different compared to the through hole 880 of the brace 800 of Fig. 12.

The through hole 880 of the brace 800 of Fig. 13 is configured to substantially match the through hole 780 of the intermediate part 778 of Figs. 11A and 11B.

The brace 800 of Fig. 12 can be considered to be configured for use with the intermediate part 778 of Figs 10A and 10B and/or the inner part 550 of Figs. 8A to 8C and the brace 800 of Fig. 13 can be considered to be configured for use with the intermediate part 778 of Figs. 11A and 11B and/or inner part 650 of Figs. 9A to 9C.

Fig. 14A shows an example apparatus 100, along with a threaded rod 500. The apparatus can be considered an apparatus 100 for supporting an object. In Fig. 14A, the apparatus 100 is shown in an unassembled condition.

The apparatus 100 is shown in an assembled condition in Fig. 14B.

The apparatus 100 includes first and second retainers 110, 120, a first support 130 including a first support surface, and a fastener 140. The fastener 140 comprises an inner part 550 and an outer part 160. In this example, the apparatus 100 is for supporting a pipe from the threaded rod 500.

The apparatus 100 of Fig. 14A also comprises an intermediate part 778 and a brace 800. In the example of Figs. 14A and 14B the apparatus comprises the inner part 550 of Figs. 8A to 8C, the intermediate part 778 of Figs. 10A and 10B and the brace 800 of Fig. 12 which are configured for use with the inner part 550 of Figs. 8A to 8C.

As can be seen in Fig. 14B, in the assembled state the intermediate part 778 abuts the first support 130 with the band of the first support 130 located in the notches 784 of the intermediate part 778. The brace 800 is located on the intermediate part 778 and the band of the first support 130 is located in the notches 892 of the brace. The outer part 160 abuts the brace 800.

Fig. 15A shows an example apparatus 100, along with a threaded rod 500. The apparatus can be considered an apparatus 100 for supporting an object. In Fig. 15A, the apparatus 100 is shown in an unassembled condition.

The apparatus 100 is shown in an assembled condition in Fig. 15B.

The apparatus 100 includes first and second retainers 110, 120, a first support 130 including a first support surface, and a fastener 140. The fastener 140 comprises an inner part 650 and an outer part 160. In this example, the apparatus 100 is for supporting a pipe from the threaded rod 500.

The apparatus 100 of Fig. 15A also comprises an intermediate part 778 and a brace 800. In the example of Figs. 15A and 15B the apparatus comprises the inner part 650 of Figs. 9A to 9C, the intermediate part 778 of Figs. 11A and 11B and the brace 800 of Fig. 13 which are configured for use with the inner part 650 of Figs. 9A to 9C.

As can be seen in Fig. 15B, in the assembled state the intermediate part 778 abuts the first support 130 with the band of the first support 130 located in the notches 784 of the intermediate part 778. The brace 800 is located on the intermediate part 778 and the band of the first support 130 is located in the notches 892 of the brace. The outer part 160 abuts the brace 800.

Fig. 16A shows a side view and cross section of an assembled apparatus.

The example shown in Fig. 16A corresponds to the example shown in Fig. 14B, however in the example of Fig. 16A the brace 800 is not present.

Fig. 16B shows a side view and cross section of an assembled apparatus.

The example shown in Fig. 16B corresponds to the example shown in Fig. 14B. The brace 800 is present in the example of Fig. 16B.

There is thus described an apparatus (example first 100, second 200 and third apparatuses are described herein) for supporting an object with a number of advantages. The apparatus is simple to assemble relative to conventional apparatuses, especially for workers using the apparatus at height. The apparatus can utilise a single joint to couple a support to for instance a wall, ceiling or beam (via a threaded rod or otherwise), and thus has a reduced likelihood of failure relative to those with multiple joints. The load in the joint is shared equally between both the first and second retainers, which also reduces the possibility of failure. Furthermore, the support and retainers can be manufactured from a single band, providing for simple and low-cost manufacture.

Additionally, alternatively, the apparatus can be secure and resistant to twisting in use.

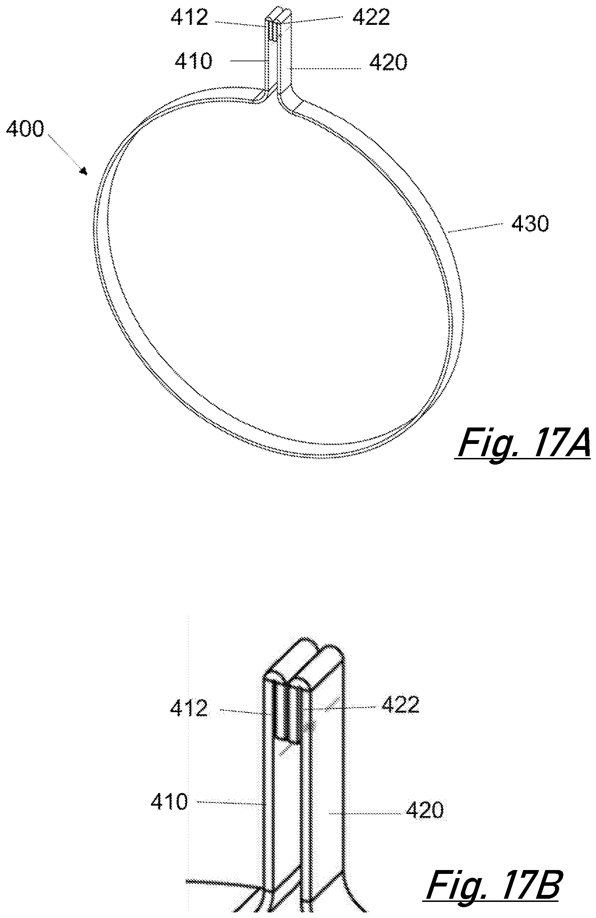

Figs. 17 to 19 Illustrate a further example apparatus 100. Fig. 17A shows a perspective view of a fourth example support 430 and Fig. 17B shows a magnified view of Fig. 17A. The fourth support 430 includes a fourth support surface which is similar to the first support surface of the first support 130. A first retainer 410 extending from the fourth support 430 is for coupling at least in part by the fourth support surface to a second retainer 420 extending from the fourth support 430. The first and second retainers 410, 420 are similar to the first and second retainers 110, 120, 210, 220, 310, 320.

The fourth support 430 differs from the first support 130 in that the stop 412 of the first retainer 410 and the stop 422 of the second retainer 420, extend perpendicular to the screw axis inwardly, towards the screw axis, rather than outwardly. That is, the folded section of each retainer 410, 420, that comprises each stop 412, 422, is folded inwards, towards the screw axis, rather than folded outwards. This leads to the first retainer 410 and second retainer 420 being spaced apart in a direction perpendicular to the screw axis.

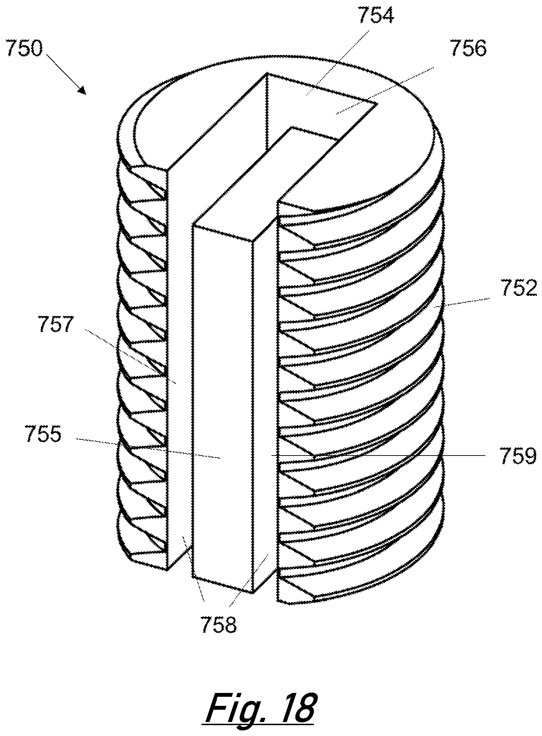

Fig. 18 shows an example of an inner part of a fastener. The inner part 750 shown in this example is similar to the inner parts 150, 550, 650 of Figs. 1 and 2, Figs. 8A to 8C, and Figs. 9A to 9C respectively; and comprises an external thread 752, at least one slot 754, a recess 756 and an elongate opening 758. In examples, one or more of the features of the inner part 750 of Fig. 18 can be changed and/or omitted. For example, the recess 756 and/or elongate opening 758 can be omitted.

The inner part 750 of Fig. 18 differs from the previous example inner parts 150, 550 650 in that the at least one slot 754 comprises a dividing portion 758 which divides the at least one slot 754 such that it comprises a first portion 757 that is shaped to receive the first retainer 410 and a second portion 759 that is shaped to receive the second retainer 420. The dividing portion 758 may provide some of the walls of the slot 754.

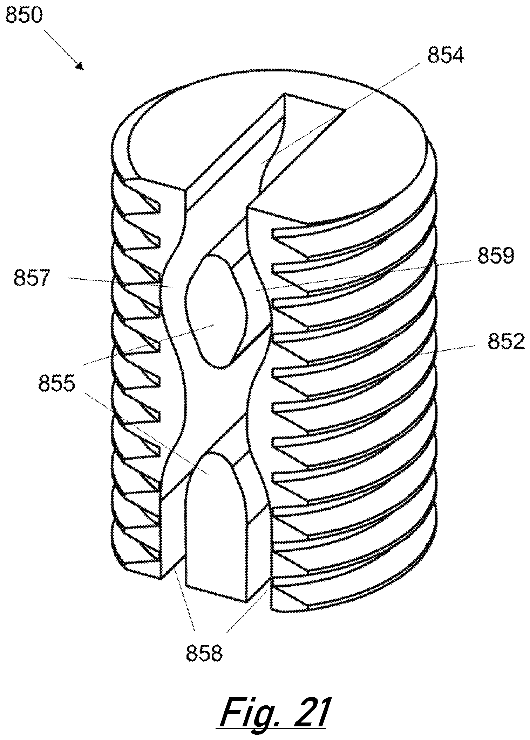

The dividing portion 758 may have a substantially rectangular cross section. In the example of Fig. 18 the dividing portion extends across the entirety of the slot 754 in a direction perpendicular to the screw axis, but does not extend across the entirety of the slot 754 in a direction parallel to the screw axis. In some examples, the dividing portion 758 may have a different form, for example, the dividing portion 758 may be comprised of multiple separate parts. See, for example, Fig. 21.

The first portion 757 of the slot 754 is shaped to receive the first retainer 410 such that the first retainer 410 is rotatably fixed relative to the first portion 757 and the stop 412 prevents the first retainer 410 from exiting the first slot in a direction co-incident with or parallel to the screw axis. The second portion 759 of the slot 754 is shaped to receive the second retainer 420 such that the second retainer 420 is rotatably fixed relative to the second portion 759 and the stop 422 prevents the second retainer 420 from exiting the second portion 759 in a direction co-incident with or parallel to the screw axis.

In the example of Fig. 18, the first and second portions 757, 759 are each elongate, are each through holes and each have a substantially rectangular cross section. The first portion 757 is substantially parallel with the second portion 759. The first and second portions 757, 759 at least partially overlap in a direction parallel to the screw axis. They may substantially overlap such that the first and second portions 757, 759 are substantially level. In the illustrated example, the first and second portions 757, 759 are joined by the recess 756, which is located at the distal end of the inner portion 750. In some examples, the first and second portions 757, 759 can have a different form. For example, they can have non-rectangular cross sections and/or the recess 756 can be omitted and the first and second portions 757, 759 can be entirely separate.

The elongate opening 758 of the slot 754 provides an opening to each of the first and second portions 757, 759. Each of the first portion 757 and the second portion 759 may comprise any of the features as described previously concerning the slot 754.

The at least one slot 754 of Fig. 18 may be considered to be two separate slots 757, 759. That is, the first portion 757 of at least one slot 754 may be considered a first slot 757 and the second portion 759 of at least one slot 754 may be considered a second slot 759. As such, in examples, the at least one slot 754 comprises at least two slots 757, 759. Each of the first slot 757 and the second slot 759 may comprise any of the features as described previously concerning the slot 754, the first portion 757 and the second portion 759.

In some examples, the inner part 750 of Fig. 18 may comprise a non-threaded portion 570 similar to the inner part 550 of Figs. 8A to 8C, and/or flattened portions 676 similar to the inner part 650 of Figs. 9A to 9C, such that the inner part 750 is configured to cooperate with the intermediate part 778 of Figs. 10A and 10B or Figs. 11A and 11B.

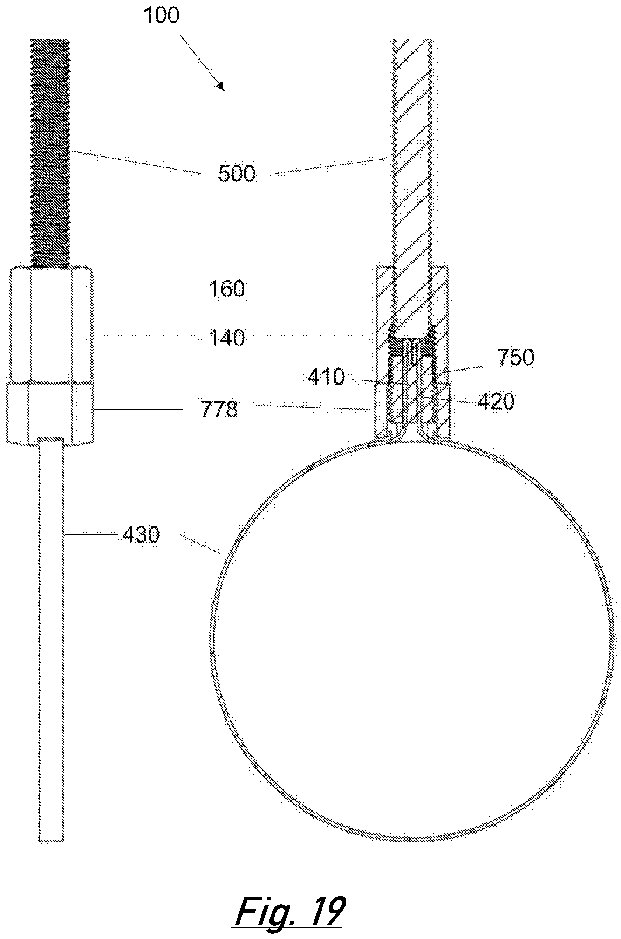

Fig. 19 shows a side view and cross section of an example apparatus 100, the apparatus 100 being in an assembled condition. The apparatus 100 includes first and second retainers 410, 420, a fourth support 430 including a fourth support surface, a fastener 140 and an intermediate part 778. The fastener 140 comprises an inner part 750 and an outer part 160. In this example, the apparatus 100 is for supporting a pipe from the threaded rod 500.

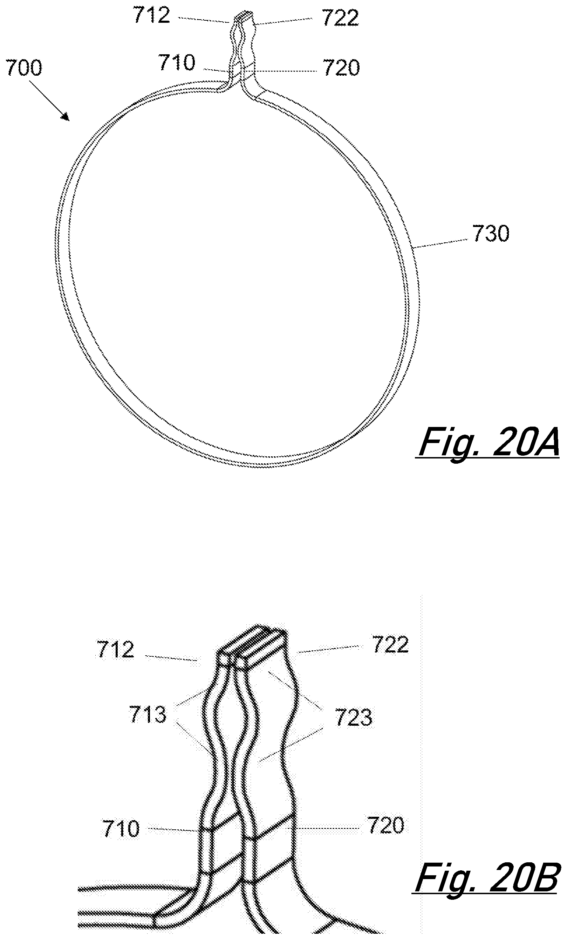

Figs. 20 to 22 Illustrate another further example apparatus. Fig. 20A shows a perspective view of a fifth example support and Fig. 20B shows a magnified view of Fig. 20A. A first retainer 710 extending from the fifth support 730 is for coupling at least in part by the fifth support surface to a second retainer 720 extending from the fifth support 730. The fifth support 730 includes a fifth support surface which is similar to the first support surface of the first support 130.

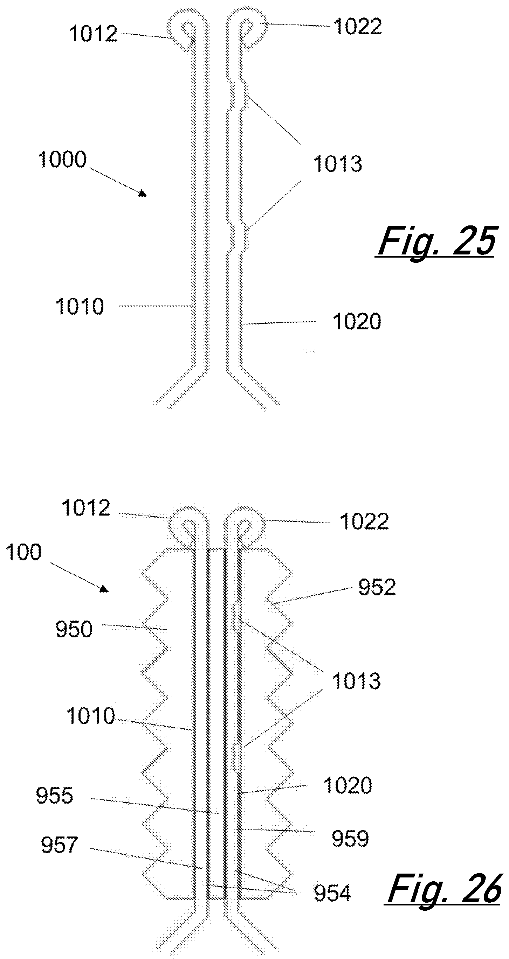

The first and second retainers 710, 720 are similar to the first and second retainers 110, 120, 210, 220, 310, 320, 410, 420. However, they differ in that for the first and second retainers 710, 720, the stop 712, 722 is not formed from a folded section of the first or second retainer 710, 720, and is instead formed by at least one kink 713, 723 in at least one of the first and second retainer 710, 720. The stop 712 of the first retainer 710 may be formed by at least one kink 713 in the first retainer 710, and the stop 722 of the second retainer 720 may be formed by at least one kink 723 in the second retainer 720. The at least one kink 713, 723 may be a twist, bend, or curve. The at least one kink 713, 723 may be a portion of the retainer 710, 720 where the retainer 710, 720 changes direction. For example, changing direction from extending at least partially inwardly, towards the screw axis, to extending at least partially outwardly, away from the screw axis. In some examples, such as in Fig. 25, a retainer 710, 720 may comprise both at least one kink 713, 723 and a folded section of the retainer 710, 720.

In the example of Figs. 20A and 20B each stop 712, 722 is formed by two kinks 713, 723 in the respective retainer 710, 720. For each retainer 710, 720 one of the kinks 713, 723 is provided at or towards a distal end of the retainer 710, 720, and so the stop 712, 722 is a distal stop 712, 722.

The first and second retainers 710, 720 can have any suitable shape. In the example of Figs 20A and 20B they are substantially non-linear in shape. They may be at least one of curved, arced, crimped, irregular, kinked, twisted, sawtooth shaped, and wave shaped. As they extend from the fifth support 730, the retainers 710, 720 each alternate between extending at least partially inwardly, towards the screw axis, and extending at least partially outwardly, away from the screw axis.

Fig. 21 shows an example of an inner part of a fastener. The inner part 850 shown in this example is similar to the inner parts 150, 550, 650, 750 of Figs. 1 and 2, Figs. 8A to 8C, Figs. 9A to 9C respectively, and Fig. 18; and comprises an external thread 852, at least one slot 854, and an elongate opening 858. In examples, one or more of the features of the inner part 850 of Fig. 21 can be changed and/or omitted. For example, the elongate opening 858 can be omitted. The inner part 850 of Fig. 21 differs from the previous example inner parts 150, 550 650, 750 in that the at least one slot 854 comprises at least one kink.

The at least one slot 854 and at least one of the first and second retainers 710, 720 may have cooperative shapes. For example, the at least one slot 854 and at least one of the first and second retainers 710, 720 may have inverse shapes, such that at least one of the first and second retainers 710, 720 can fit inside the slot 854. In some examples, the at least one slot 854 and at least one of the first and second retainers 710, 720 may have different shapes, for example, a retainer 710, 720 may comprise at least one kink 713, 723 whilst the at least one slot 854 is straight and so does not comprise at least one kink, such as in Fig. 26.

The at least one slot 854 and at least one of the first and second retainers 710 are configured to cooperate to provide the stop 712, 722. At the distal end of the retainers 710, 720, the ends of the retainers 710, 720 come together. These ends cooperate with the walls of the slot 854 to provide a distal stop 712, 722. The slot 854 and at least one of the first and second retainers 710, 720 may fit together with an interference fit. This helps to prevents the first and second retainer 710. 720 from exiting the slot 854 in a direction co-incident with or parallel to the screw axis.

The at least one slot 854 may comprise more than one kink. The walls of the at least one slot 854 may be substantially non-linear in shape such that the at least one slot 854 is substantially non-linear in shape. The walls may be at least one of curved, arced, crimped, irregular, kinked, twisted, sawtooth shaped, and wave shaped. The slot 854 can alternate between extending at least partially inwardly, towards the screw axis, and extending at least partially outwardly, away from the screw axis.

In some examples, such as in Fig. 21, the inner part 850 is similar to the inner part 750 of Fig. 18, in that it also comprises a dividing portion 855. However, the dividing portion 855 of FIG. 21 comprises two separate parts. The parts are separated from another in a direction parallel to or co-incident with the screw axis. The dividing portion 855 divides the at least one slot 854 such that it comprises a first portion 857 that is shaped to receive the first retainer 710 and a second portion 859 that is shaped to receive the second retainer 720.

In the example of Fig. 21, the first and second portions 857, 859 are each elongate, through holes. The first portion 857 is substantially parallel with the second portion 859 and they are joined by a recess. The first and second portions 857, 859 at least partially overlap in a direction parallel to the screw axis. This overlap may be substantial such that the first and second portions 857, 859 are substantially level. In the illustrated example, the first and second portions 857, 859 are out of phase, specifically antiphase, with each other, whereas in other examples they are in phase with each other. Each of the first portion 857 and the second portion 859 may comprise any of the features as described previously concerning the slot 854, in particular the shape.

The at least one slot 854 of Fig. 21 may be considered to be two separate slots 857, 859. That is, the first portion 857 of at least one slot 854 may be considered a first slot 857 and the second portion 859 of at least one slot 854 may be considered a second slot 759. As such, in examples, the at least one slot 854 comprises at least two slots 857, 859. Each of the first slot 857 and the second slot 859 may comprise any of the features as described previously concerning the slot 854, the first portion 857 and the second portion 859.

In some examples, the inner part 850 of Fig. 21 may comprise a non-threaded portion 570 similar to the inner part 550 of Figs. 8A to 8C, and/or flattened portions 676 similar to the inner part 650 of Figs. 9A to 9C, such that the inner part 850 is configured to cooperate with the intermediate part 778 of Figs. 10A and 10B or Figs. 11A and 11B.

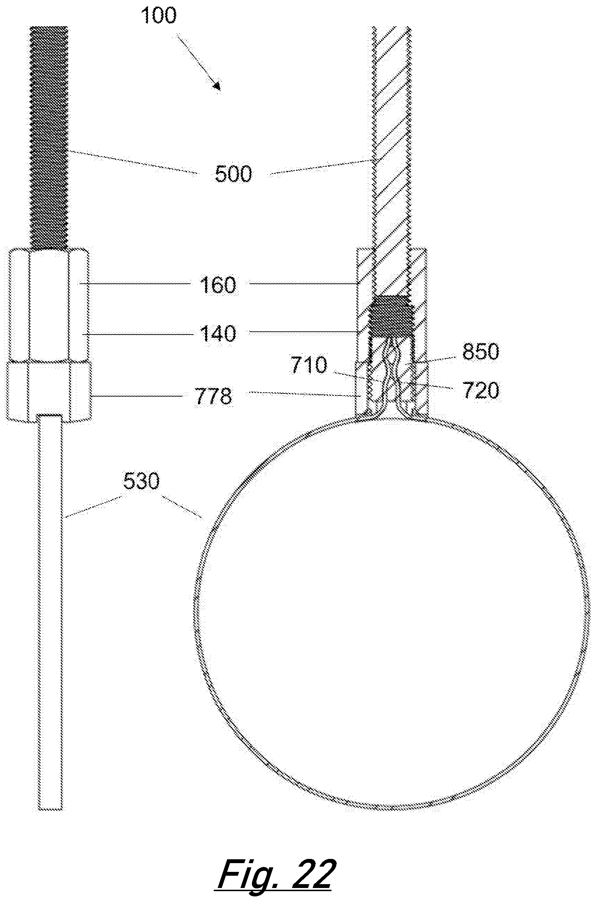

Fig. 22 shows a side view and cross section of an example apparatus, the apparatus being in an assembled condition. The apparatus 100 includes first and second retainers 710, 720, a fifth support 730 including a fifth support surface, a fastener 140 and an intermediate part 778. The fastener 140 comprises an inner part 850 and an outer part 160. In this example, the apparatus 100 is for supporting a pipe from the threaded rod 500.

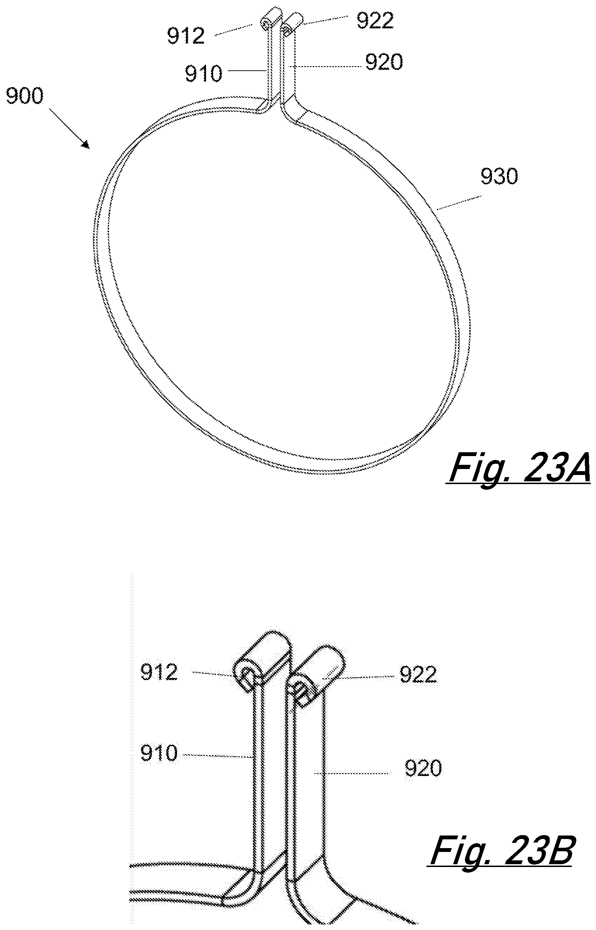

Figs. 23 to 24 Illustrate another further example apparatus. Fig. 23A shows a perspective view of a sixth example support and Fig. 23B shows a magnified view of Fig. 23A. The sixth support 930 includes a sixth support surface which is similar to the first support surface of the first support 130. A first retainer 910 extending from the sixth support 930 is for coupling at least in part by the sixth support surface to a second retainer 920 extending from the sixth support 930.

The first and second retainers 910, 920 of the sixth example support 930 are similar to the first and second retainers 710, 720 of the fifth example support 730. However, they differ in that for the first and second retainers 910, 920, the stop 912, 922 is formed from a folded section of the first or second retainer 910, 920, which is folded outwards, away from the screw axis, rather than folded outwards. Additionally, the folded section for each retainer 910, 920 is curved/curled.

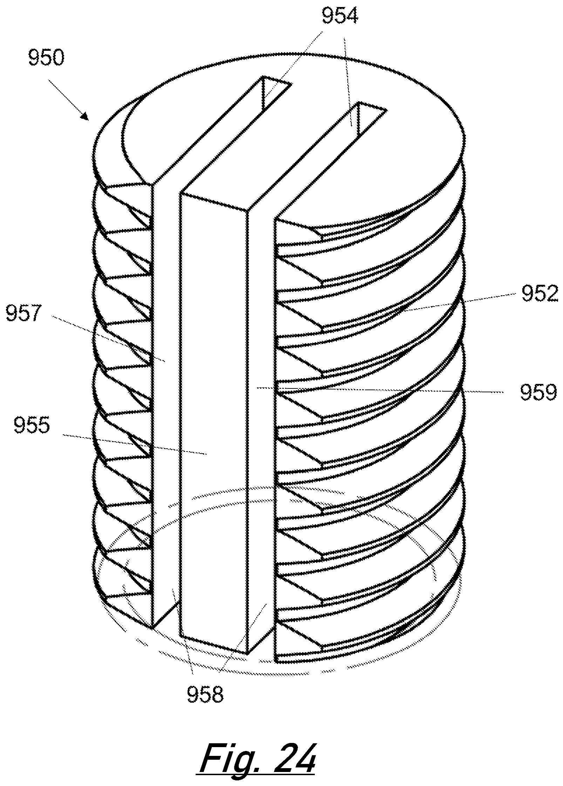

Fig. 24 shows an example of an inner part 950 of a fastener. The inner part 950 shown in this example is similar to the inner part 750 of FIG. 18; and comprises an external thread 952, at least one slot 954, a recess 956, a dividing portion 958 and an elongate opening 958. The inner part 950 of Fig. 24 differs from the inner part 750 of FIG. 18 in that the at least one slot 954 does not comprise a recess and the dividing portion 958 extends across the entirety of the slot in a direction parallel to the screw axis. Similarly to the at least one slot 754 of FIG. 18, the at least one slot 954 of Fig. 24 may be considered to comprise two separate slots 957, 959 or to comprise two separate slot portions 957, 959.

Figs. 25 and 26 Illustrate another further example apparatus. Fig. 25 shows a perspective view of a seventh example support. The seventh support includes a seventh support surface (not visible) which is similar to the first support surface of the first support 130. A first retainer 1010 extending from the seventh support is for coupling at least in part by the seventh support surface to a second retainer 1020 extending from the seventh support.

The first and second retainers 1010, 1020 of the seventh example support are similar to the first and second retainers 910, 920 of the sixth example support 930. However, they differ in that the first retainer 1010 is straight and so does not comprise at least one kink, whilst the second retainer is non-linear and so comprises at least one kink 1013.

Fig. 26 shows a cross section of an example apparatus 100, the apparatus 100 being in an assembled condition. The apparatus 100 includes first and second retainers 1010, 1020, and an inner part 950 of a fastener. The inner part 950 shown in this example is the inner part 950 of Fig. 24.

In this example, the second retainer 1020 comprises at least one kink 1013 whilst the second portion 959 of at least one slot 954, which receives the second retainer 1020, is straight and so does not comprise at least one kink. The second retainer 1020 is configured to deform elastically to fit inside the second portion 959 of the at least one slot 954, such that the second retainer 1020 is straight when located inside the at least one slot 954. That is, the at least one kink 1013, is configured to be deformed by the at least one slot 954 such that it is straightened. This provides an interference fit between the second retainer 1020 and the at least one slot 954, which improves the connection between the second retainer 1020 and the inner part 950 of the fastener.

Various modifications can be made without departing from the scope of the claims.

## Claims

1. An apparatus (100, 200) for supporting an object (600), the apparatus comprising:
a support surface;
a first retainer (110, 210, 310, 410, 710, 910, 1010) and a second retainer (120, 220, 320, 420, 720, 920, 1020), the first retainer being for coupling at least in part by the support surface to the second retainer, or being coupled at least in part by the support surface to the second retainer, wherein at least one of the first and second retainers comprises a stop (112, 122, 212, 222, 312, 322, 412, 422, 712, 722, 912, 922);
a fastener (140) , comprising:
an outer part (160) including an internal surface that comprises a threaded portion (164) wherein the internal surface of the outer part is an internal surface of a through hole extending through the outer part; and
an inner part (150, 350, 450, 550, 650, 750, 850, 950) including an external thread (152, 352, 552, 652, 752, 852, 952) arranged to enable the outer part to threadably rotate around the inner part, and at least one slot (154, 354, 454, 554, 654, 754, 757, 759, 854, 857, 859, 954, 957, 959) having a non-circular cross section in a plane perpendicular to the screw axis of the external thread, the at least one slot being shaped to receive the first and second retainers, such that the first and second retainers are rotatably fixed relative to the at least one slot and the stop prevents the retainers from exiting the at least one slot in a direction co-incident with or parallel to the screw axis.

2. An apparatus according to claim 1, wherein the stop is a distal stop.

3. An apparatus according to claim 1 or 2, wherein the at least one slot is shaped to receive the first and second retainers together.

4. An apparatus according to claim 1, 2 or 3, wherein the at least one slot is a through hole.

5. An apparatus according to any of the preceding claims, wherein the at least one slot has a substantially rectangular cross section.

6. An apparatus according to claim any of the preceding claims, wherein the at least one slot includes an elongate opening (158, 558, 658, 758, 858, 958) extending parallel to the screw axis, which is configured to receive the first and/or second retainer from a direction perpendicular to the screw axis of the external thread.

7. An apparatus according to any of the preceding claims, wherein the first and second retainers together have a non-circular cross section that corresponds to the non-circular cross section of the at least one slot, such that the first and second retainers are rotatably fixed relative to the at least one slot.

8. An apparatus according to any of the preceding claims, wherein the stop is formed from a folded section of the first or second retainer.

9. An apparatus according to any of the preceding claims, wherein the first retainer comprises the stop, the stop and the second retainer combined extending to a greater extent than the at least one slot in a dimension perpendicular to the screw axis to prevent the retainers from exiting the at least one slot in a direction co-incident with or parallel to the screw axis.

10. An apparatus according to any of the preceding claims, wherein the first and second retainers each comprise a stop.

11. An apparatus according to claim 10, wherein the stops of the first and second retainers combined extend to a greater extent than the at least one slot of the inner part of the fastener in a dimension perpendicular to the screw axis to prevent the retainers from exiting the at least one slot in a direction co-incident with or parallel to the screw axis.

12. An apparatus according to any of the preceding claims, wherein the hole extending through the outer part has a greater extent along the screw axis than the inner part, such that the whole of the inner part can be received within the hole.

13. An apparatus according to any of the preceding claims, wherein the first and second retainers are integrally formed with a support (130, 230, 330, 430, 730, 930) including the support surface, wherein a support including the support surface is arranged to encircle the object.

14. An apparatus according to any of the preceding claims, wherein the inner part comprises a non-threaded portion (570) which extends from an end of the externally threaded portion along a direction substantially parallel with the screw axis of the external thread, wherein, optionally, the non-threaded portion comprises the at least one slot and elongate opening.

15. An apparatus according to any of the preceding claims, wherein a support includes the support surface, and wherein the apparatus comprises an intermediate part (778) configured to cooperate with the inner part and/or the support to stabilise and/or prevent twisting of the first and second retainers and/or the support in use.

## Patentansprüche

1. Vorrichtung (100, 200) zum Tragen eines Objekts (600), wobei die Vorrichtung umfasst:
eine Trägerfläche;
einen ersten Halter (110, 210, 310, 410, 710, 910, 1010) und einen zweiten Halter (120, 220, 320, 420, 720, 920, 1020), wobei der erste Halter zum Koppeln, zumindest teilweise durch die Trägerfläche, an den zweite Halter dient oder zumindest teilweise durch die Trägerfläche an den zweite Halter gekoppelt wird, wobei mindestens einer von dem ersten und dem zweiten Halter einen Anschlag (112, 122, 212, 222, 312, 322, 412, 422, 712, 722, 912, 922) umfasst;
ein Befestigungselement (140), das Folgendes umfasst:
ein Außenteil (160), das eine Innenfläche beinhaltet, die einen Gewindeabschnitt (164) umfasst, wobei die Innenfläche des Außenteils eine Innenfläche eines Durchgangslochs ist, das sich durch das Außenteil erstreckt; und
ein Innenteil (150, 350, 450, 550, 650, 750, 850, 950), das ein Außengewinde (152, 352, 552, 652, 752, 852, 952), das dazu angeordnet ist, es dem Außenteil zu ermöglichen, sich gewindemäßig um das Innenteil zu drehen, und mindestens einen Schlitz (154, 354, 454, 554, 654, 754, 757, 759, 854, 857, 859, 954, 957, 959) mit einem nicht kreisförmigen Querschnitt in einer Ebene senkrecht zur Schraubenachse des Außengewindes beinhaltet, wobei der mindestens eine Schlitz dazu geformt ist, den ersten und den zweiten Halter aufzunehmen, sodass der erste und der zweite Halter in Bezug auf den mindestens einen Schlitz drehbar fixiert sind und der Anschlag verhindert, dass die Halter den mindestens einen Schlitz in einer Richtung verlassen, die mit der Schraubenachse zusammenfällt oder parallel zu dieser ist.

2. Vorrichtung nach Anspruch 1, wobei der Anschlag ein distaler Anschlag ist.

3. Vorrichtung nach Anspruch 1 oder 2, wobei der mindestens eine Schlitz dazu geformt ist, den ersten und den zweiten Halter zusammen aufzunehmen.

4. Vorrichtung nach Anspruch 1, 2 oder 3, wobei der mindestens eine Schlitz ein Durchgangsloch ist.

5. Vorrichtung nach einem der vorhergehenden Ansprüche, wobei der mindestens eine Schlitz einen im Wesentlichen rechteckigen Querschnitt aufweist.

6. Vorrichtung nach einem der vorhergehenden Ansprüche, wobei der mindestens eine Schlitz eine längliche Öffnung (158, 558, 658, 758, 858, 958) beinhaltet, die sich parallel zu der Schraubenachse erstreckt und dazu konfiguriert ist, den ersten und/oder den zweiten Halter aus einer Richtung senkrecht zu der Schraubenachse des Außengewindes aufzunehmen.

7. Vorrichtung nach einem der vorhergehenden Ansprüche, wobei der erste und der zweite Halter zusammen einen nicht kreisförmigen Querschnitt aufweisen, der dem nicht kreisförmigen Querschnitt des mindestens einen Schlitzes entspricht, sodass der erste und der zweite Halter in Bezug auf den mindestens einen Schlitz drehbar fixiert sind.

8. Vorrichtung nach einem der vorhergehenden Ansprüche, wobei der Anschlag aus einem gefalteten Teilabschnitt des ersten oder des zweiten Halters gebildet ist.

9. Vorrichtung nach einem der vorhergehenden Ansprüche, wobei der erste Halter den Anschlag umfasst, wobei sich der Anschlag und der zweiten Halter gemeinsam in einem größeren Ausmaß als der mindestens eine Schlitz in einer Dimension senkrecht zu der Schraubenachse erstrecken, um zu verhindern, dass die Halter den mindestens einen Schlitz in einer Richtung verlassen, die mit der Schraubenachse zusammenfällt oder parallel zu dieser ist.

10. Vorrichtung nach einem der vorhergehenden Ansprüche, wobei der erste und der zweite Halter jeweils einen Anschlag umfassen.

11. Vorrichtung nach Anspruch 10, wobei sich die Anschläge des ersten und zweiten Halters gemeinsam in einem größeren Ausmaß als der mindestens eine Schlitz des Innenteils des Befestigungselements in einer Dimension senkrecht zu der Schraubenachse erstrecken, um zu verhindern, dass die Halter den mindestens einen Schlitz in einer Richtung verlassen, die mit der Schraubenachse zusammenfällt oder parallel zu dieser ist.

12. Vorrichtung nach einem der vorhergehenden Ansprüche, wobei das Loch, das sich durch das Außenteil erstreckt, ein größeres Ausmaß entlang der Schraubenachse als das Innenteil aufweist, so dass das gesamte Innenteil in dem Loch aufgenommen werden kann.

13. Vorrichtung nach einem der vorhergehenden Ansprüche, wobei der erste und der zweite Halter einstückig mit einem Träger (130, 230, 330, 430, 730, 930) ausgebildet sind, der die Trägerfläche beinhaltet, wobei ein Träger, der die Trägerfläche beinhaltet, dazu angeordnet ist, den Gegenstand zu umgeben.

14. Vorrichtung nach einem der vorhergehenden Ansprüche, wobei der Innenteil einen gewindelosen Abschnitt (570) umfasst, der sich von einem Ende des Außengewindeabschnitts entlang einer Richtung erstreckt, die im Wesentlichen parallel zu der Schraubenachse des Außengewindes ist, wobei der gewindelose Abschnitt optional den mindestens einen Schlitz und die längliche Öffnung umfasst.

15. Vorrichtung nach einem der vorhergehenden Ansprüche, wobei ein Träger die Trägerfläche beinhaltet und wobei die Vorrichtung ein Zwischenteil (778) umfasst, das dazu konfiguriert ist, mit dem Innenteil und/oder dem Träger zusammenzuwirken, um ein Verdrehen des ersten und des zweiten Halters und/oder des Trägers im Gebrauch zu stabilisieren und/oder zu verhindern.

## Revendications

1. Appareil (100, 200) destiné à supporter un objet (600), l'appareil comprenant :
une surface de soutien ;
un premier élément de retenue (110, 210, 310, 410, 710, 910, 1010) et un second élément de retenue (120, 220, 320, 420, 720, 920, 1020), le premier élément de retenue étant destiné à être accouplé au moins en partie par la surface de soutien au second élément de retenue, ou étant accouplé au moins en partie par la surface de soutien au second élément de retenue, au moins l'un des premier et second éléments de retenue comprenant une butée (112, 122, 212, 222, 312, 322, 412, 422, 712, 722, 912, 922) ;
un élément de fixation (140) comprenant :
une partie externe (160) comprenant une surface interne qui comprend une partie filetée (164), ladite surface interne de la partie externe étant une surface interne d'un trou traversant s'étendant à travers la partie externe ; et
une partie interne (150, 350, 450, 550, 650, 750, 850, 950) comprenant un filetage externe (152, 352, 552, 652, 752, 852, 952) agencé pour permettre à la partie externe de tourner par filetage autour de la partie interne, et au moins une fente (154, 354, 454, 554, 654, 754, 757, 759, 854, 857, 859, 954, 957, 959) possédant une section transversale non circulaire dans un plan perpendiculaire à l'axe de vis du filetage externe, la au moins une fente étant façonnée pour recevoir les premier et second éléments de retenue, de sorte que les premier et second éléments de retenue soient fixés de manière rotative par rapport à l'au moins une fente et que la butée empêche les éléments de retenue de sortir de la au moins une fente dans une direction coïncidant avec l'axe de vis ou parallèle à celui-ci.

2. Appareil selon la revendication 1, ladite butée étant une butée distale.

3. Appareil selon la revendication 1 ou 2, ladite au moins une fente étant façonnée pour recevoir les premier et second éléments de retenue ensemble.

4. Appareil selon la revendication 1, 2 ou 3, ladite au moins une fente étant un trou traversant.

5. Appareil selon l'une quelconque des revendications précédentes, ladite au moins une fente possédant une section transversale sensiblement rectangulaire.

6. Appareil selon l'une quelconque des revendications précédentes, ladite au moins une fente comprenant une ouverture allongée (158, 558, 658, 758, 858, 958) s'étendant parallèlement à l'axe de vis, qui est conçue pour recevoir le premier et/ou le second élément de retenue en provenance d'une direction perpendiculaire à l'axe de vis du filetage externe.

7. Appareil selon l'une quelconque des revendications précédentes, lesdits premier et second éléments de retenue possédant ensemble une section transversale non circulaire qui correspond à la section transversale non circulaire de la au moins une fente, de sorte que les premier et second éléments de retenue sont fixés de manière rotative par rapport à la au moins une fente.

8. Appareil selon l'une quelconque des revendications précédentes, ladite butée étant formée à partir d'une section pliée du premier ou du second élément de retenue.

9. Appareil selon l'une quelconque des revendications précédentes, ledit premier élément de retenue comprenant la butée, la butée et le second élément de retenue combinés s'étendant sur une plus grande étendue que la au moins une fente dans une dimension perpendiculaire à l'axe de vis pour empêcher les éléments de retenue de sortir de la au moins une fente dans une direction coïncidant avec l'axe de vis ou parallèle à celui-ci.

10. Appareil selon l'une quelconque des revendications précédentes, lesdits premier et second éléments de retenue comprenant chacun une butée.

11. Appareil selon la revendication 10, lesdites butées des premier et second éléments de retenue combinés s'étendant sur une plus grande étendue que la au moins une fente de la partie interne de l'élément de fixation dans une dimension perpendiculaire à l'axe de vis pour empêcher les éléments de retenue de sortir de la au moins une fente dans une direction coïncidant avec l'axe de vis ou parallèle à celui-ci.

12. Appareil selon l'une quelconque des revendications précédentes, ledit trou s'étendant à travers la partie externe possédant une étendue plus grande le long de l'axe de vis que la partie interne, de sorte que la totalité de la partie interne puisse être reçue à l'intérieur du trou.

13. Appareil selon l'une quelconque des revendications précédentes, lesdits premier et second éléments de retenue étant formés d'un seul tenant avec un support (130, 230, 330, 430, 730, 930) comprenant la surface de soutien, un support comprenant la surface de soutien étant agencé pour encercler l'objet.

14. Appareil selon l'une quelconque des revendications précédentes, ladite partie interne comprenant une partie non filetée (570) qui s'étend à partir d'une extrémité de la partie filetée extérieurement le long d'une direction sensiblement parallèle à l'axe de vis du filetage externe, éventuellement, ladite partie non filetée comprenant la au moins une fente et une ouverture allongée.

15. Appareil selon l'une quelconque des revendications précédentes, un support comprend la surface de soutien, et ledit appareil comprenant une partie intermédiaire (778) conçue pour coopérer avec la partie interne et/ou le support pour stabiliser et/ou empêcher la torsion des premier et second éléments de retenue et/ou du support lors de l'utilisation.
